(19) Europäisches Patentamt
European Patent Office
Office européen des brevets

(11) **EP 4 756 733 A1**

(12) **EUROPEAN PATENT APPLICATION**
published in accordance with Art. 153(4) EPC

(43) Date of publication:
**10.06.2026 Bulletin 2026/24**

(51) International Patent Classification (IPC):
*G06V 10/764* (2022.01)

(21) Application number: **23948202.9**

(86) International application number:
**PCT/CN2023/118621**

(22) Date of filing: **13.09.2023**

(87) International publication number:
**WO 2025/030635 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.08.2023 CN 202310976976**

(71) Applicant: **Tencent Technology (Shenzhen) Company Limited**
**Shenzhen, Guangdong 518057 (CN)**

(72) Inventor: **ZHU, Cheng**
**Shenzhen, Guangdong 518057 (CN)**

(74) Representative: **EP&C**
**P.O. Box 3241**
**2280 GE Rijswijk (NL)**

(54) **DATA PROCESSING METHOD AND APPARATUS, DEVICE AND STORAGE MEDIUM**

(57) The embodiments of the present application belong to artificial intelligence technologies and disclose a data processing method and apparatus, a device and a storage medium. The method comprises: adding to a target service image random noise data corresponding to K time steps, so as to obtain K noisy images; outputting N candidate service tags and the K noisy images to a service diffusion model and, according to candidate service tag i, denoising the K noisy images of the target service image by means of the service diffusion model, so as to obtain denoised images corresponding to candidate service tag i respectively under the K time steps; fusing the denoised images corresponding to candidate service tag i respectively under the K time steps, so as to obtain a fused denoised image corresponding to candidate service tag i; and, according to the fused denoised images respectively corresponding to the N candidate service tags, determining a target service tag of the target service image from among the N candidate service tags. The present application can improve the tag identification efficiency of service diffusion models.

FIG. 5

**Description**

RELATED APPLICATION

This application claims priority to Chinese Patent Application No. 2023109769761, filed with the China National Intellectual Property Administration on August 4, 2023 and entitled "DATA PROCESSING METHOD AND APPARATUS, DEVICE, AND STORAGE MEDIUM", which is incorporated herein by reference in its entirety.

FIELD OF THE TECHNOLOGY

This application relates to the field of artificial intelligence technologies and the like, and in particular, to a data processing method and apparatus, a device, and a storage medium.

BACKGROUND OF THE DISCLOSURE

Artificial intelligence software technologies mainly include several major directions such as computer vision technologies, a speech recognition technology, a natural language processing technology, and machine learning/deep learning. The computer vision technologies generally include technologies such as image processing, image recognition, image semantic understanding, image retrieval, optical character recognition (OCR), video processing, video semantic understanding, video content/behavior recognition, three-dimensional object reconstruction, a three-dimensional (D) technology, virtual reality, augmented reality, and simultaneous localization and mapping. The image recognition is to recognize a label of an image based on a trained image recognition model, and the label of the image reflects a category of an object in the image. In practice, it is found that a current image recognition model takes a long time to recognize a label, resulting in low efficiency of label recognition.

SUMMARY

Embodiments of this application provide a data processing method and apparatus, a device, and a storage medium, to reduce time consumption of recognizing a label by a service diffusion model and improve efficiency of recognizing the label by the service diffusion model.

According to an aspect of the embodiments of this application, a data processing method is provided, including:

obtaining a target service image and N candidate service labels that are associated with a target service, N being a positive integer greater than 1;

adding random noise data corresponding to K time steps to the target service image, to obtain K noise-added images of the target service image, K being a positive integer greater than 1;

outputting the N candidate service labels and the K noise-added images of the target service image to a service diffusion model, and denoising the K noise-added images of the target service image based on a candidate service label i through the service diffusion model, to obtain denoised images respectively corresponding to the candidate service label i in the K time steps, i being a positive integer less than or equal to N, and N being a positive integer greater than 1;

fusing the denoised images respectively corresponding to the candidate service label i in the K time steps, to obtain a fused denoised image corresponding to the candidate service label i; and

determining a target service label of the target service image from the N candidate service labels based on fused denoised images respectively corresponding to the N candidate service labels.

According to an aspect of the embodiments of this application, a data processing apparatus is provided, including:

an obtaining module, configured to obtain a target service image and N candidate service labels that are associated with a target service, N being a positive integer greater than 1;

an addition module, configured to add random noise data corresponding to K time steps to the target service image, to obtain K noise-added images of the target service image, K being a positive integer greater than 1;

a processing module, configured to: output the N candidate service labels and the K noise-added images of the target service image to a service diffusion model, and denoise the K noise-added images of the target service image based on a candidate service label i through the service diffusion model, to obtain denoised images respectively corresponding to the candidate service label i in the K time steps, i being a positive integer less than or equal to N, and N being a positive integer greater than 1;

a fusion module, configured to fuse the denoised images respectively corresponding to the candidate service label i in the K time steps, to obtain a fused denoised image corresponding to the candidate service label i; and

a determining module, configured to determine a target service label of the target service image from the N candidate service labels based on fused denoised images respectively corresponding to the N candidate service labels.

According to an aspect of the embodiments of this application, a computer device is provided, including a memory and a processor, the memory having a computer program stored therein, and the processor, when executing the computer program implementing the operations of the foregoing method.

According to an aspect of an embodiment of this application, a computer-readable storage medium is provided, having a computer program stored therein, the computer program, when executed by a processor, implementing the operations of the foregoing method.

According to an aspect of an embodiment of this application, a computer program product is provided, including a computer program, the computer program, when executed by a processor, implementing the operations of the foregoing method.

In this application, a target service label of a target service image has a strong one-to-one correspondence with a space (namely, an image region) of the target service image, that is, one target service label corresponds to one image region in the target service image. Therefore, a computer device may input a plurality of candidate service labels (namely, N candidate service labels) into a service diffusion model at the same time. The service diffusion model determines, based on denoised images corresponding to each candidate service label in different time steps (namely, K time steps), a fused denoised image corresponding to a corresponding candidate service label, and determines the target service label of the target service image from the N candidate service labels based on fused denoised images respectively corresponding to the N candidate service labels. It can be learned that, the plurality of candidate service labels do not need to be inputted one by one, which is beneficial to quickly recognizing one or more target service labels of the target service image, reducing time consumption of recognizing the label by the service diffusion model, and improving efficiency of recognizing the label by the service diffusion model.

BRIEF DESCRIPTION OF THE DRAWINGS

To describe technical solutions of embodiments of this application or the related art more clearly, the following briefly introduces accompanying drawings required for describing the embodiments or the related art. Apparently, the accompanying drawings in the following description show only some embodiments of this application, and a person of ordinary skill in the art may still derive other drawings from these accompanying drawings without creative efforts.

FIG. 1 is a schematic diagram of a data processing system according to this application.

FIG. 2 is a schematic diagram of a model structure of a general diffusion model according to this application.

FIG. 3 is a schematic diagram of an interaction scenario of a data processing method according to this application.

FIG. 4 is a schematic diagram of an interaction scenario of another data processing method according to this application.

FIG. 5 is a schematic flowchart of a data processing method according to this application.

FIG. 6 is a schematic diagram of a scenario of obtaining a denoised image based on a candidate service label according to this application.

FIG. 7 is a schematic flowchart of another data processing method according to this application.

FIG. 8 is a schematic diagram of interaction between an up-sampling network of a general diffusion model and an up-sampling network of an initial diffusion model according to this application.

FIG. 9 is a schematic diagram of interaction between an up-sampling block of a general diffusion model and an up-sampling block of an initial diffusion model according to this application.

FIG. 10 is a schematic structural diagram of a data processing apparatus according to an embodiment of this application.

FIG. 11 is a schematic structural diagram of a computer device according to an embodiment of this application.

DESCRIPTION OF EMBODIMENTS

The following clearly and completely describes the technical solutions in embodiments of this application with reference to the accompanying drawings in embodiments of this application. The described embodiments are only some of the embodiments of this application rather than all of the embodiments. All other embodiments obtained by a person of ordinary skill in the art based on embodiments of this application without creative efforts shall fall within the protection scope of this application.

Embodiments of this application may relate to the field of artificial intelligence technologies, automated driving, intelligent traffic, and the like. The artificial intelligence (AI) is a theory, a method, a technology, and an application system that use a digital computer or a machine controlled by the digital computer to simulate, extend, and expand human intelligence, perceive an environment, obtain knowledge, and use the knowledge to obtain an optimal result. In other words, the artificial intelligence is a comprehensive technology in computer science. The artificial intelligence attempts to understand an essence of intelligence, and produces a new intelligent machine that can react in a manner similar to the human intelligence. The artificial intelligence is to study design principles and implementation methods of various intelligent machines, to enable the machines to have functions of perception, reasoning, and decision-making.

The artificial intelligence technology is a comprehensive discipline, and relates to a wide range of fields including both a hardware-level technology and a software-level technology. Basic artificial intelligence technologies generally include technologies such as a sensor, a dedicated artificial intelligence chip, cloud computing, distributed storage, a big data processing technology, an operating/interaction system, and electromechanical integration. Artificial intelligence software technologies mainly include several major directions such as computer vision technologies, a speech processing technology, a natural language processing technology, and machine learning/deep learning.

Machine learning (ML) is a multi-field cross-discipline involving a plurality of disciplines such as probability theory, statistics, approximation theory, convex analysis, and algorithmic complexity theory. It specializes in the study of how computers simulate or implement human learning behaviors to obtain new knowledge or skills and reorganize existing knowledge structures, to continuously improve their performance. Machine learning is the core of artificial intelligence and the fundamental way to make computers intelligent, with applications covering various fields of artificial intelligence. Machine learning and deep learning generally include technologies such as an artificial neural network, a confidence network, reinforcement learning, transfer learning, inductive learning, and tutorial learning.

For example, in this application, a service diffusion model is constructed by using a machine learning technology. The service diffusion model can be configured for recognizing a service label of an image. For example, a computer device may input a plurality of candidate service labels (namely, N candidate service labels) into the service diffusion model at the same time. The service diffusion model determines, based on denoised images corresponding to each candidate service label in different time steps (namely, K time steps), a fused denoised image corresponding to a corresponding candidate service label, and determines a target service label of a target service image from the N candidate service labels based on fused denoised images respectively corresponding to the N candidate service labels. It can be learned that, the plurality of candidate service labels do not need to be inputted one by one, which is beneficial to quickly recognizing one or more target service labels of the target service image, reducing time consumption of recognizing the label by the service diffusion model, and improving efficiency of recognizing the label by the service diffusion model.

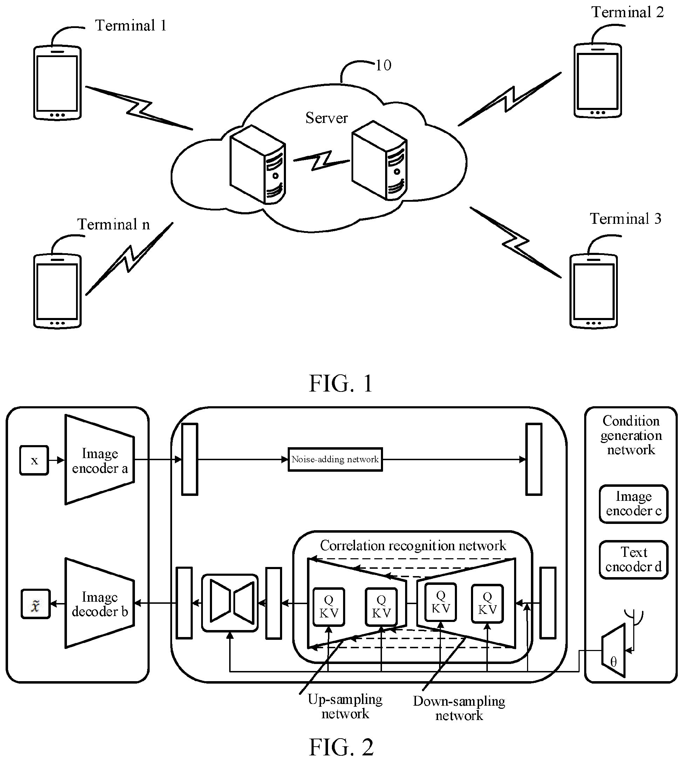

To facilitate clearer understanding of this application, a data processing system implementing this application is first described. As shown in FIG. 1, the data processing system includes a server 10 and a terminal cluster. The terminal cluster may include one or more terminals. A quantity of terminals is not limited herein. As shown in FIG. 1, the terminal cluster may specifically include a terminal 1, a terminal 2, ..., and a terminal n. The terminal 1, the terminal 2, the terminal 3, ..., and the terminal n may all perform network connections with the server 10, so that each terminal may exchange data with the server 10 through the network connection.

One or more target applications are installed in the terminal. The target application herein may refer to an application having an image processing function (for example, downloading an image or generating a label of an image). For example, the target application may include an independent application, a web application, a mini program in a host application, or the like. The server 10 refers to a device that provides a backend service for the target application in the terminal. In an embodiment, the server may be configured to train an initial diffusion model based on a trained general diffusion model, to obtain a service diffusion model configured for recognizing a service label of a target service, and transmit the service diffusion model to the terminal. The service diffusion model may be a functional module in the target application in the terminal. In actual application, the terminal may invoke the service diffusion model to recognize a service label of a target service image.

The server may be an independent physical server, or a server cluster or a distributed system including at least two physical servers, or may be a cloud server that provides a cloud service, a cloud database, cloud computing, a cloud function, cloud storage, a network service, cloud communication, a middleware service, a domain name service, a security service, a content delivery network (CDN), and a basic cloud computing service such as big data or an artificial intelligence platform. The terminal may specifically refer to an in-vehicle terminal, a smartphone, a tablet computer, a notebook computer, a desktop computer, a smart speaker, a screen speaker, a smartwatch, or the like, but is not limited thereto. The terminals and the server may be connected directly or indirectly in a wired or wireless communication manner. In addition, there may be one or at least two terminals and servers. This is not limited in this application.

The target service may refer to an image-related service. For example, the target service may refer to an image review service. The image review service refers to recognizing whether an image includes a sensitive picture, and the sensitive picture refers to data that cannot be directly presented to a user. Alternatively, the target service may refer to an image classification service, for example, classifying images including animals, characters, and the like. Alternatively, the target service may refer to a security check service, for example, preventing a stranger from entering a neighborhood. The target service image and a sample service image refer to images associated with the target service, to be specific, the target service image and the sample service image refer to images whose association with the target service is greater than an association threshold. In other words, the target service image refers to a to-be-recognized service image. The sample service image is a service image configured for training the initial diffusion model. For example, the target service may refer to the image review service. The sample service image may include an image with a sensitive picture and an image without a sensitive picture. The target service image refers to a to-be-reviewed image. For example, the target service image may refer to an image to be uploaded to a web page. A marking service label of the target service may refer to label marking whether the sample service image includes content concerned by the target service. For example, when the target service is the image review service, the marking service label may include naked, violent, bloody, normal, and the like. When the marking service label is naked, violent, or bloody, it reflects that the sample service image includes the sensitive picture. When the marking service label is normal, it reflects that the sample service image does not include the sensitive picture. When the target service is the image classification service, the marking service label may include animals, characters, buildings, plants, and the like. More specifically, the marking service label includes cats, dogs, people, buildings at a place, flowers, trees, and the like. When the target service is the security check service, the marking service label may include a user inside a neighborhood, a user outside a neighborhood, and the like. The marking service label is obtained by manually marking the sample service image associated with the target service, a predicted service label is obtained by the initial diffusion model predicting the sample service image, and a target service label is obtained by the service diffusion model recognizing the target service image associated with the target service.

A general image may refer to an image whose association with the target service is less than or equal to the association threshold. For example, the general image may be an image obtained from the Internet. A general image label may be obtained from a web page, or the general image label may be a marking service label associated with another service. The another service refers to a service other than the target service in this application. The general image label may refer to description information of the general image. For example, if the general image is an image including a dog, the general image label of the general image is: high-definition pet dog photographing image appreciation. For another example, if the general image is an image including a sunset, the general image label of the general image is: natural scenic view of a beautiful sunset. Certainly, languages of these general image labels may be Chinese, or may be other languages.

It can be known by comparing the general image label with the marking service label that description forms of the marking service label are uniform, description forms of the general image label are diversified, and there is a particular similarity degree between the general image label and the service label. For example, if the general image is an image including a dog, the general image label of the general image is: high-definition pet dog photographing image appreciation. When the target service is the image classification service, and the sample service image is an image including a dog, the marking service label of the sample service image is: dog. It can be learned that, the general image label and the marking service label both include a keyword: dog. The general diffusion model in this application is obtained through training based on the general image and the general image label, and there is a similarity between the general image label and the marking service label. Therefore, it may be referred to that the general diffusion model has a rough capability of recognizing the service label of the target service image. The service diffusion model may be obtained through fine adjustment based on the general diffusion model. In this way, when accuracy of the service diffusion model is ensured, the service diffusion model is obtained through training by using a small quantity of marking service labels, thereby improving training accuracy and training efficiency of the service diffusion model.

The general diffusion model, the initial diffusion model, and the service diffusion model in this application all belong to a diffusion model. The diffusion model is also a generation model. The diffusion model may generate an image by introducing noise and then attempting at denoising. The general diffusion model in this application may be obtained through training based on the general image and the general image label. The initial diffusion model and the general diffusion model have a same model structure. For example, both the initial diffusion model and the general diffusion model include a noise-adding network, an up-sampling network, and a down-sampling network. The noise-adding network may refer to a network configured for adding random noise data to an image. The down-sampling network is configured for performing down-sampling processing on a noise-added image obtained by the noise-adding network. The up-sampling network is configured for performing up-sampling processing on a down-sampling image obtained by the down-sampling network, to remove the random noise data in the noise-added image. A weight of the noise-adding network of the initial diffusion model is the same as a weight of the noise-adding network of the general diffusion model, a weight of the down-sampling network of the initial diffusion model is the same as a weight of the down-sampling network of the general diffusion model, and a weight of the up-sampling network of the initial diffusion model is the same as a weight of the up-sampling network of the general diffusion model.

In some embodiments, the general diffusion model may further include an image encoder, an image decoder, and a condition generation network. The image encoder is configured for mapping the general image from a pixel space to a latent space, to obtain a latent space representation of the general image, and using the latent space representation of the general image as an image feature of the general image. In an application scenario of generating image data based on text data, the condition generation network is configured for performing feature extraction on the text data (such as the general image label or a text prompt), to obtain a text feature corresponding to the text data. In a training stage of the general diffusion model, the image decoder is configured for mapping a denoised image feature that is outputted by the up-sampling network to the pixel space, to obtain a general image restored based on a noisy image feature. In an inference process of the general diffusion model, the image decoder is configured for mapping a denoised image that is outputted by the up-sampling network to the pixel space, to obtain an image associated with the text prompt.

For example, as shown in FIG. 2, the general diffusion model may include an image encoder a, a noise-adding network, a condition generation network, an up-sampling network, a down-sampling network, and an image decoder b. In a training process of the general diffusion model, the image encoder a is configured for mapping a general image x from a pixel space to a latent space, to obtain an image feature z of the general image x, and the noise-adding network is configured for adding random noise data corresponding to a random step t to the image feature z, to obtain a noisy image feature corresponding to the general image. The condition generation network includes an image encoder c and a text encoder d, configured for performing text feature extraction on a general image label of the general image x, to obtain a general text feature $\theta$ of the general image label. The down-sampling network is configured for predicting prediction noise data corresponding to the random step t based on the general text feature $\theta$ and the noisy image feature, and training the general diffusion model based on the random noise data and the prediction noise data corresponding to the random step t, to obtain a trained general diffusion model. Q, K, and V in the up-sampling network and the down-sampling network indicate that the related up-sampling network and down-sampling network both are attention mechanism-based networks, and the image encoder a, the noise-adding network, the condition generation network, and a correlation recognition network are trained in advance. The condition generation network may refer to a clip network. The condition generation network is configured for managing information in two different dimensions: computer vision (image data) and human language (namely, text data), and the two pieces of information use a same mathematical representation. For example, an image including a dog and text data (a photo of the dog) is inputted into the condition generation network, the condition generation network can output an image feature vector and a text feature vector, and the image feature vector matches the text feature vector. In this application, the condition generation network may be configured for extracting a service text feature of a service text label. In this application, an example in which the general diffusion model includes the noise-adding network, the up-sampling network, and the down-sampling network is mainly used for description. The up-sampling network and the down-sampling network may form a unet network. The unet network is configured for denoising the noise-adding network, and the unet network may also be referred to as a denoising network.

In a training process of the initial diffusion model, weights of the noise-adding network and the up-sampling network of the initial diffusion model remain unchanged, and fine adjustment may be performed on the up-sampling network of the initial diffusion model based on a sample service image and a marking service label, to obtain the service diffusion model. In other words, the computer device can obtain the service diffusion model configured for recognizing a service label of a target service only by embedding a small quantity of marking service labels of the target service into the general diffusion model, so that the service diffusion model has a refined capability of recognizing a service label of a target service image, that is, the service diffusion model has a refined capability of recognizing the label of the target service. In this way, not only accuracy of recognizing the label by the service diffusion model is improved, but also training efficiency of the service diffusion model is improved, costs are reduced, and there is no need to completely depend on the marking service label to retrain the service diffusion model from scratch.

A time step in this application refers to a quantity of noise-adding operations of adding random noise data to an image. Different time steps correspond to different quantities of noise-adding operations. The time step may be represented as T, one time of adding noise may be represented by t, and t may also be referred to as a random step, that is, t may also be referred to as a t<sup>th</sup> time of adding noise. Noise amounts of random noise data corresponding to different random steps are different, and the noise amount of the random noise data increases as the random step t increases. For example, when T=5, first, when t=1, random noise data corresponding to a random step 1 is added to the target service image, to obtain a noise-added image z1. When t=2, random noise data corresponding to a random step 2 is added to the noise-added image z1, to obtain a noise-added image z2. The rest can be deduced by analogy until a noise-added image z5 is obtained. In other words, noise data respectively corresponding to the random step 1 to a random step 5 is accumulated in the noise-added image z5. A noise amount of the random noise data corresponding to the random step 1 is the smallest, a noise amount of random noise data corresponding to the random step 5 is the largest, and the noise-added image z5 may be referred to as a noise image in a time step 5.

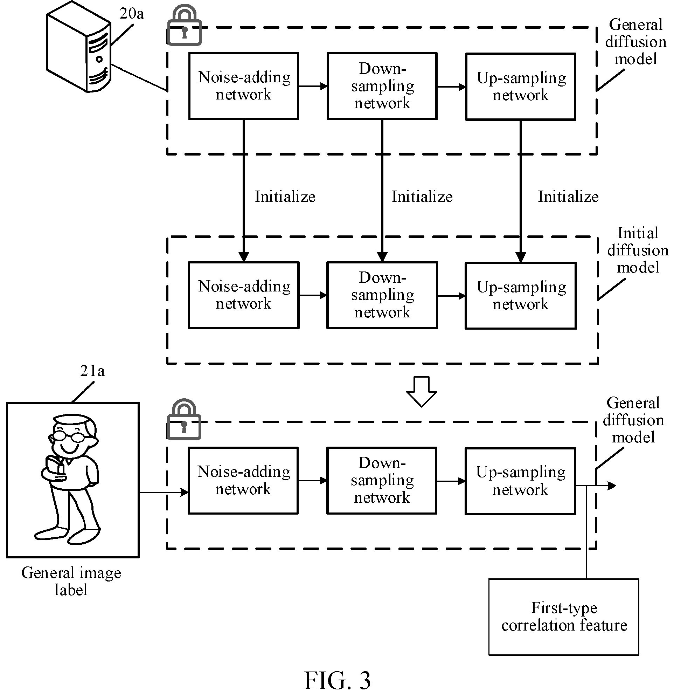

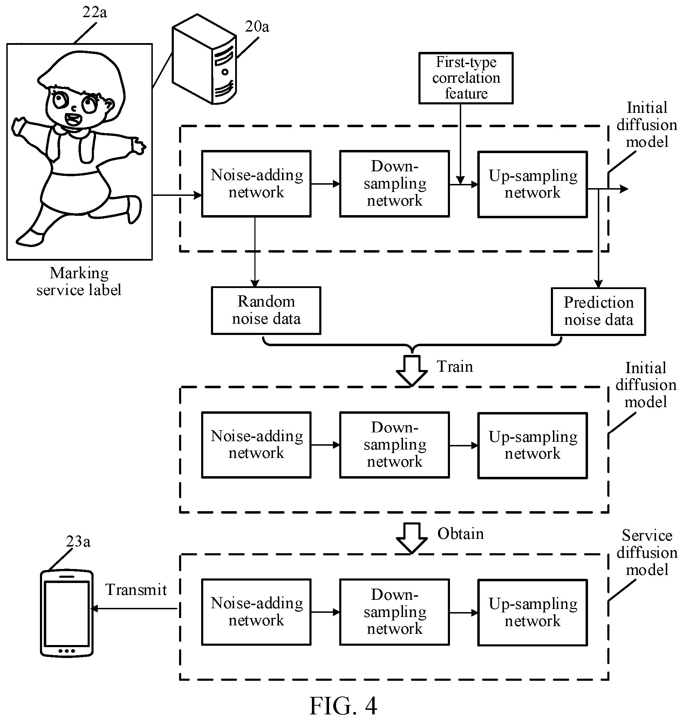

The data processing system in FIG. 1 may be configured for implementing a data processing method in this application. As shown in FIG. 3 and FIG. 4, a server 20a in FIG. 3 and FIG. 4 may refer to the server 10 in FIG. 1, and a terminal 23a in FIG. 4 may refer to any terminal in the terminal cluster in FIG. 1. FIG. 3 and FIG. 4 are described by using an example in which the target service is an image review service. The image review service checks validity of an image to be published by a user or an image in to-be-published video data, for example, checks whether the image to be published by the user or the image in the to-be-published video data includes a sensitive picture.

As shown in FIG. 3, the server 20a may download a general diffusion model from a web page, or may obtain a general image and a general image label of the general image from a web page, and train a general diffusion model based on the general image and the general image label, to obtain a trained general diffusion model. The general image herein may include a service image related to a target service, or may include an image not associated with a target service. A general image 21a is used as an example in FIG. 3. The general image 21a may refer to an image including a character, and a general image label of this general image is: serious xx teacher. The general diffusion model may include a noise-adding network, an up-sampling network, and a down-sampling network. After obtaining the general diffusion model, the server 20a may construct an initial service diffusion model based on a structure of the general diffusion model. A structure of the initial service diffusion model is the same as the structure of the general diffusion model. The initial service diffusion model also has a noise-adding network, an up-sampling network, and a down-sampling network. The initial service diffusion model is also referred to as an initial diffusion model.

Further, the server 20a may initialize a weight of the noise-adding network of the initial service diffusion model based on a weight of the noise-adding network of the general diffusion model, initialize a weight of the up-sampling network of the initial service diffusion model based on a weight of the up-sampling network of the general diffusion model, and initialize a weight of the down-sampling network of the initial service diffusion model based on a weight of the down-sampling network of the general diffusion model. In other words, the weight of the noise-adding network of the general diffusion model is migrated to the noise-adding network of the initial service diffusion model, the weight of the up-sampling network of the general diffusion model is migrated to the up-sampling network of the initial service diffusion model, and the weight of the down-sampling network of the general diffusion model is migrated to the down-sampling network of the initial service diffusion model. In other words, the weight of the noise-adding network of the initial diffusion model is the same as the weight of the noise-adding network of the general diffusion model, the weight of the up-sampling network of the initial diffusion model is the same as the weight of the up-sampling network of the general diffusion model, and the weight of the down-sampling network of the initial diffusion model is the same as the weight of the down-sampling network of the general diffusion model, that is, the initial diffusion model has the same recognition capability as the general diffusion model. The server 20a may obtain a sample service image associated with the image review service and a marking service label of the sample service image. There may be a plurality of sample service images. As shown in FIG. 4, an example in which the sample service image includes a sample service image 22a is used for description. The sample service image 22a is an image including a character. A marking service label of the sample service image 22a is normal (reflecting that the sample service image does not include the sensitive picture), the marking service label is obtained by manually marking the sample service image 22a, and the marking service label reflects a real label (an actual label) of the sample service image 22a of the image review service.

Next, the server 20a may invoke a noise-adding network of the general diffusion model, and add the random noise data corresponding to the random step t to the general image 21a, to obtain a noise-added image of the general image 21a; and further invoke the down-sampling network of the general diffusion model, to perform down-sampling processing on the noise-added image of the general image 21a, to obtain a down-sampling image of the general image 21a. Then, the up-sampling network of the general diffusion model may be invoked to recognize a correlation feature between the general image 21a and the general image label based on a general image label and the down-sampling image of the general image 21a, and the correlation feature between the general image 21a and the general image label is determined as a first-type correlation feature between the general image 21a and the general image label.

Similarly, as shown in FIG. 4, the server 20a may invoke the noise-adding network of the initial diffusion model, and add the random noise data corresponding to the random step t to the sample service image 22a, to obtain a noise-added image of the sample service image 22a; and invoke the down-sampling network of the initial diffusion model, to perform down-sampling processing on the noise-added image of the sample service image 22a, to obtain a down-sampling image of the sample service image 22a. Then, the up-sampling network of the initial diffusion model may be invoked to recognize a correlation feature between the sample service image 22a and the marking service label based on the marking service label, the first-type correlation feature, and the down-sampling image of the sample service image 22a, and the correlation feature between the sample service image 22a and the marking service label is determined as a second-type correlation feature between the sample service image 22a and the marking service label. Prediction noise data in the noise-added image of the sample service image 22a is determined based on the second-type correlation feature.

The server 20a may adjust the weight of the up-sampling network of the initial diffusion model based on the prediction noise data and the random noise data corresponding to the random step t. The server 20a may refer to the foregoing operations to train the initial diffusion model for a plurality of times based on another sample service image, to obtain the service diffusion model. In a training process of the initial diffusion model, a parameter of the general diffusion model is in a frozen state, that is, in the training process of the initial diffusion model, the parameter of the general diffusion model remains unchanged. In this way, the general diffusion model may be configured for training various service-associated recognition models, thereby improving utilization of the general diffusion model. In addition, forward diffusion processes of different services are similar, that is, in all the forward diffusion processes, noise adding processing is performed on an image feature operation by operation. Therefore, in the training process of the initial diffusion model, the weight of the noise-adding network of the initial diffusion model is in the frozen state, and only a parameter of the up-sampling network of the initial diffusion model needs to be adjusted, thereby improving training efficiency of the service diffusion model. In addition, the up-sampling network of the initial diffusion model is adjusted through the marking service label, so that an adjusted service diffusion model has a capability of recognizing the service label of the target service, thereby improving accuracy of recognizing the label by the service diffusion model.

After the service diffusion model is obtained through training, the server 20a may transmit the service diffusion model to the terminal 23a. After receiving a to-be-published target service image, the terminal 23a may input the target service image and a plurality of candidate service labels of the image review service into the service diffusion model, and recognize, from the plurality of candidate service labels through the service diffusion model, a candidate service label of the target service image as a target service label of the target service image. Further, validity of the target service image is determined based on the target service label of the target service image. For example, if the target service label of the target service image is normal, it is determined that the target service image has validity. If the target service label of the target service image includes naked, bloody, violent, or the like, it is determined that the target service image does not have validity. If the target service image does not have validity, publishing of the target service image is suspended. If the target service image has validity, the target service image is published, that is, the target service image may be published to a network. It can be ensured that the image review service is quickly and accurately processed through the service diffusion model, thereby improving processing efficiency and accuracy of the image review service.

The training process of the initial diffusion model may alternatively be performed by the terminal 23a. For a specific implementation process, refer to the training process of the initial diffusion model by the server 20a. Details are not described herein again.

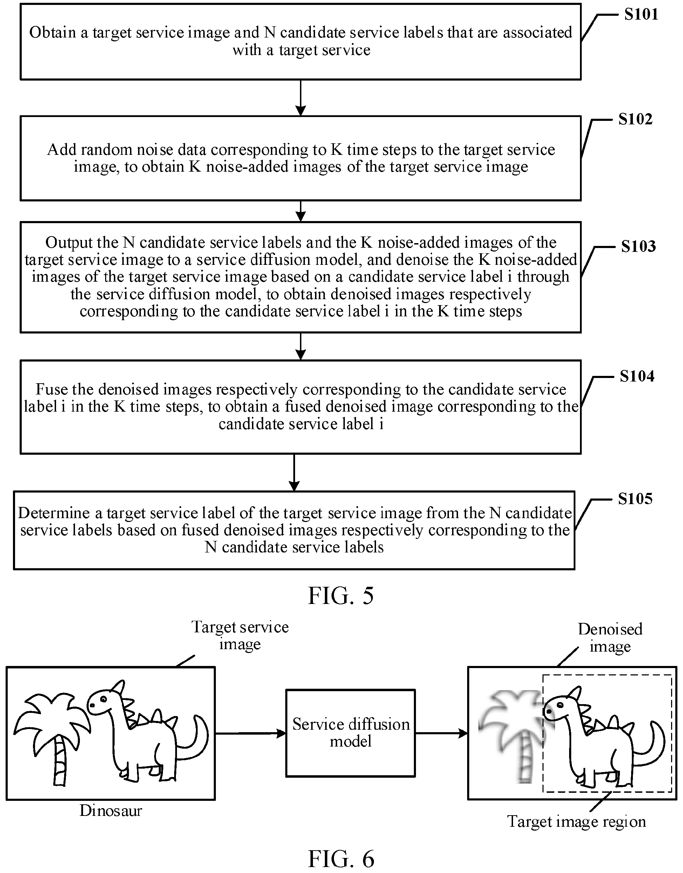

Further, FIG. 5 is a schematic flowchart of a data processing method according to an embodiment of this application. As shown in FIG. 5, the method may be performed by any terminal in the terminal cluster in FIG. 1, or may be performed by the server in FIG. 1, or may be cooperatively performed by the terminal in the terminal cluster and the server in FIG. 1. Devices configured to perform the data processing method in this application may be collectively referred to as computer devices. The method may include the following operations.

S101: Obtain a target service image and N candidate service labels that are associated with a target service, N being a positive integer greater than 1.

In this application, the computer device may obtain the target service image associated with the target service, and the N candidate service labels associated with the target service. The target service image may refer to a to-be-recognized image of the target service, and the candidate service label may refer to a marking service label of the target service. For example, if the target service is an image review service, the target service image may refer to a to-be-reviewed image (for example, an image to be published to a network). The candidate service label may include naked, violent, bloody, normal, and the like. If the target service is an image classification service, the target service image may refer to a to-be-classified image, and the candidate service label may include animals, characters, buildings, plants, and the like. More specifically, the candidate service label includes cats, dogs, people, buildings at a place, flowers, trees, and the like. When the target service is a security check service, the candidate service label may include a user inside a neighborhood, a user outside a neighborhood, and the like.

S102: Add random noise data corresponding to K time steps to the target service image, to obtain K noise-added images of the target service image, K being a positive integer greater than 1.

In this application, the computer device may add the random noise data corresponding to the K time steps to the target service image, to obtain the K noise-added images of the target service image, K being a positive integer greater than 1. None of the K time steps is the same. For example, the K time steps may be: T1, T2, ..., and Tc, and c=K. Assuming that T1=10, the computer device may accumulate random noise data respectively corresponding to a random step 1 to a random step 10 to the target service image, to obtain a noise-added image zT1 in the time step T1. Assuming that T2=20, the computer device may accumulate random noise data respectively corresponding to a random step 1 to a random step 20 to the target service image, to obtain a noise-added image zT2 in the time step T2. The rest can be deduced by analogy. The foregoing operations are repeated until respectively corresponding noise-added images in the K time steps are obtained, and the respectively corresponding noise-added images in the K time steps are determined as the K noise-added images of the target service image.

S103: Output the N candidate service labels and the K noise-added images of the target service image to a service diffusion model, and denoise the K noise-added images of the target service image based on a candidate service label i through the service diffusion model, to obtain denoised images respectively corresponding to the candidate service label i in the K time steps, i being a positive integer less than or equal to N, and N being a positive integer greater than 1.

In this application, the computer device may output the N candidate service labels and the K noise-added images of the target service image to the service diffusion model at the same time. For an $i^{th}$ denoising iteration, the computer device may invoke the service diffusion model to denoise the noise-added image zT1 in the time step T1 for T1 times based on the candidate service label i, to obtain a denoised image of the candidate service label i in the time step T1; and invoke the service diffusion model to denoise the noise-added image zT2 in the time step T2 for T2 times based on the candidate service label i, to obtain a denoised image of the candidate service label i in the time step T2. The rest can be deduced by analogy. The foregoing operations are repeated until the denoised images respectively corresponding to the candidate service label i in the K time steps are obtained. Further, for an $(i+1)^{th}$ denoising iteration, the computer device may invoke the service diffusion model to denoise the noise-added image zT1 in the time step T1 for T1 times based on a candidate service label i+1, to obtain a denoised image of the candidate service label i+1 in the time step T1; and invoke the service diffusion model to denoise the noise-added image zT2 in the time step T2 for T2 times based on the candidate service label i+1, to obtain a denoised image of the candidate service label i+1 in the time step T2. The rest can be deduced by analogy. The foregoing operations are repeated until denoised images respectively corresponding to the candidate service label i+1 in the K time steps are obtained. The rest can be deduced by analogy, until a quantity of times of denoising iterations is N, denoised images respectively corresponding to the N candidate service labels in the K time steps may be obtained.

S104: Fuse the denoised images respectively corresponding to the candidate service label i in the K time steps, to obtain a fused denoised image corresponding to the candidate service label i.

In this application, the computer device may fuse the denoised images respectively corresponding to the candidate service label i in the K time steps, to obtain the fused denoised image corresponding to the candidate service label i. The rest can be deduced by analogy. The foregoing operations are repeated until fused denoised images respectively corresponding to the N candidate service labels are obtained.

In an embodiment, the foregoing operation S104 includes: The computer device may accumulate the denoised images respectively corresponding to the candidate service label i in the K time steps, to obtain an accumulated denoised image, and determine the accumulated denoised image as the fused denoised image corresponding to the candidate service label i.

In an embodiment, the foregoing operation S104 includes: The computer device may perform averaging processing on the denoised images respectively corresponding to the candidate service label i in the K time steps by using an averaging algorithm, to obtain an average denoised image corresponding to the candidate service label i, and determine the average denoised image corresponding to the candidate service label i as the fused denoised image corresponding to the candidate service label i. The averaging algorithm may refer to any one of an arithmetic averaging algorithm, a geometric averaging algorithm, a quadratic averaging algorithm, and a harmonic averaging algorithm.

A target service label of the target service image has a strong one-to-one correspondence with a space (namely, an image region) of the target service image, that is, one target service label corresponds to one image region in the target service image. Therefore, if the target service image includes content corresponding to the candidate service label i, the candidate service label i can better guide the service diffusion model to denoise the noise-added images respectively corresponding to the candidate service label i in the K time steps, that is, image quality of the denoised images respectively corresponding to the candidate service label i in the K time steps is high. In other words, image quality of image regions corresponding to the candidate service label i in the denoised images respectively corresponding to the candidate service label i in the K time steps is high. Further, image quality of the fused denoised image corresponding to the candidate service label i is high. If the target service image does not include the content corresponding to the candidate service label i, the candidate service label i cannot better guide the service diffusion model to denoise the noise-added images respectively corresponding to the candidate service label i in the K time steps, that is, the image quality of the denoised images respectively corresponding to the candidate service label i in the K time steps is low. Further, the image quality of the fused denoised image corresponding to the candidate service label i is low. The image quality of the fused denoised image herein may be determined based on a pixel value in the fused denoised image. For example, if the pixel value in the fused denoised image is large, an amount of information included in the fused denoised image is large, that is, definition of the fused denoised image is high, that is, the image quality of the fused denoised image is high. On the contrary, if the pixel value in the fused denoised image is low, the amount of information included in the fused denoised image is small, that is, the definition of the fused denoised image is low, that is, the image quality of the fused denoised image is low.

For example, as shown in FIG. 6, assuming that the target service image includes a dinosaur and a tree, one candidate service label of the target service image is: dinosaur. After the N candidate service labels and the target service image are inputted into the service diffusion model, a denoised image of the target service image that is outputted by the service diffusion model in the time step T1 is shown in FIG. 6. It can be known from FIG. 6 that, image quality of a target image region in the denoised image is higher than image quality of another region in the denoised image, and the target image region is a region (namely, a region in which the dinosaur is located) indicated by the candidate service label. In other words, the candidate service label: dinosaur, can guide the service diffusion model to better denoise the target image region in the noise-added image of the target service image.

S105: Determine the target service label of the target service image from the N candidate service labels based on the fused denoised images respectively corresponding to the N candidate service labels.

In this application, the computer device may determine the target service label of the target service image from the N candidate service labels based on the fused denoised images respectively corresponding to the N candidate service labels. There may be one or more target service labels of the target service image.

In some embodiments, the foregoing operation S105 includes: The computer device may determine, based on the fused denoised images respectively corresponding to the N candidate service labels, initial service feature values respectively corresponding to the N candidate service labels. For example, the computer device may accumulate pixel values in the fused denoised image corresponding to the candidate service label i, to obtain a total pixel value corresponding to the candidate service label i, and determine the total pixel value corresponding to the candidate service label i as an initial service feature value corresponding to the candidate service label i. The rest can be deduced by analogy. The foregoing operations are repeated until the initial service feature values respectively corresponding to the N candidate service labels are obtained. If the target service image includes the content corresponding to the candidate service label i, the image quality of the fused denoised image corresponding to the candidate service label i is high. Further, the pixel value in the fused denoised image corresponding to the candidate service label i is large, and the initial service feature value corresponding to the candidate service label i is also large. On the contrary, if the target service image does not include the content corresponding to the candidate service label i, the image quality of the fused denoised image corresponding to the candidate service label i is low. Further, the pixel value in the fused denoised image corresponding to the candidate service label i is small, and the initial service feature value corresponding to the candidate service label i is small. Therefore, the computer device may perform averaging processing on the initial service feature values respectively corresponding to the N candidate service labels, to obtain an average service feature value, and determine a candidate service label of the N candidate service labels whose initial service feature value is greater than the average service feature value as the target service label of the target service image. Recognition efficiency of the target service label can be improved by recognizing the one or more target service labels in the target service image at one time.

In this application, the target service label of the target service image has the strong one-to-one correspondence with the space (namely, the image region) of the target service image, that is, one target service label corresponds to one image region in the target service image. Therefore, the computer device may input a plurality of candidate service labels (namely, the N candidate service labels) into the service diffusion model at the same time. The service diffusion model determines, based on the denoised images corresponding to each candidate service labels in different time steps (namely, the K time steps), a fused denoised image corresponding to a corresponding candidate service label, and determines the target service label of the target service image from the N candidate service labels based on the fused denoised images respectively corresponding to the N candidate service labels. It can be learned that, the plurality of candidate service labels do not need to be inputted one by one, which is beneficial to quickly recognizing the one or more target service labels of the target service image, reducing time consumption of recognizing the label by the service diffusion model, and improving efficiency of recognizing the label by the service diffusion model.

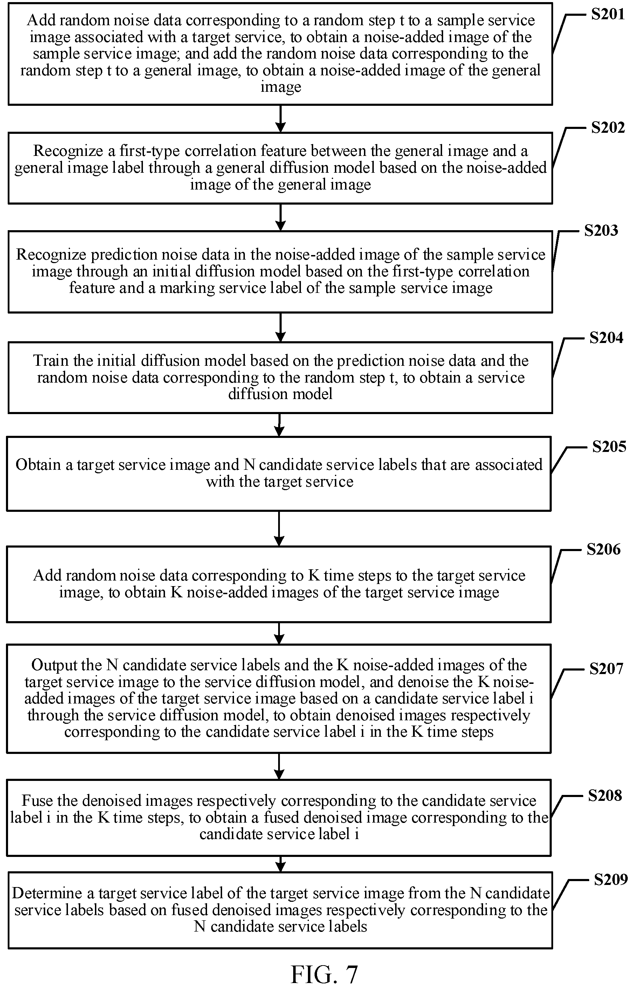

Further, FIG. 7 is a schematic flowchart of a data processing method according to an embodiment of this application. As shown in FIG. 7, the method may be performed by any terminal in the terminal cluster in FIG. 1, or may be performed by the server in FIG. 1, or may be cooperatively performed by the terminal in the terminal cluster and the server in FIG. 1. Devices configured to perform the data processing method in this application may be collectively referred to as computer devices. The method may include the following operations.

S201: Add random noise data corresponding to a random step t to a sample service image associated with a target service, to obtain a noise-added image of the sample service image; and add the random noise data corresponding to the random step t to a general image, to obtain a noise-added image of the general image, t being a positive integer.

In this application, the random step t refers to one-time noise addition. If a value of t is different, a noise amount of the random noise data corresponding to the random step t is different. As the value of the random step t increases, the noise amount of the corresponding random noise data also increases correspondingly. A value of the random step t is randomly selected from [1, T], T is a time step, and T may be an integer greater than 1. The computer device may add the random noise data corresponding to the random step t to the sample service image associated with the target service, to obtain the noise-added image of the sample service image; and add the random noise data corresponding to the random step t to the general image, to obtain the noise-added image of the general image.

S202: Recognize a first-type correlation feature between the general image and a general image label through a general diffusion model based on the noise-added image of the general image.

In this application, the computer device may invoke the general diffusion model, and recognize the first-type correlation feature between the general image and the general image label based on the noise-added image of the general image. The first-type correlation feature is configured for reflecting a correlation between the general image and the general image label, that is, the first-type correlation feature is configured for reflecting an association between the general image and the general image label.

In some embodiments, an up-sampling network of the general diffusion model includes L up-sampling blocks, and a down-sampling network of the general diffusion model includes L down-sampling blocks, L being a positive integer greater than 1. The foregoing operation S202 includes: obtaining, for a $(j+1)^{th}$ up-sampling iteration, an up-sampling image $X_j$ of the general image that is outputted by an up-sampling block j of the general diffusion model, the up-sampling image $X_j$ of the general image being obtained based on the noise-added image of the general image, and j being a positive integer less than L; obtaining a down-sampling image of the general image that is outputted by a down-sampling block L-j of the general diffusion model at an $(L-j)^{th}$ down-sampling iteration; recognizing, through an up-sampling block j+1 of the general diffusion model based on the general image label, the up-sampling image $X_j$, and the down-sampling image of the general image at the $(L-j)^{th}$ down-sampling iteration, a correlation feature between the general image and the general image label at the $(j+1)^{th}$ up-sampling iteration; and determining correlation features respectively between the general image and the general image label at L up-sampling iterations as the first-type correlation feature between the general image and the general image label.

For example, for a first down-sampling iteration, the computer device may invoke a down-sampling block 1 of the general diffusion model to perform down-sampling processing on the noise-added image of the general image based on the general image label, to obtain a down-sampling image of the general image at the first down-sampling iteration. For a second down-sampling iteration, the computer device may invoke a down-sampling block 2 of the general diffusion model to perform, based on the general image label, down-sampling processing on the down-sampling image of the general image at the first down-sampling iteration, to obtain a down-sampling image of the general image at the second down-sampling iteration. The rest can be deduced by analogy. The foregoing operations are repeated until down-sampling images respectively corresponding to the general image at L down-sampling iterations are obtained.

Further, when j=0, for a first up-sampling iteration, the computer device may invoke an up-sampling block 1 of the general diffusion model, recognize, based on the general image label and a down-sampling image of the general image at an $L^{th}$ down-sampling iteration, a correlation feature a1 between the general image and the general image label at the first up-sampling iteration, and perform, based on the correlation feature a1, up-sampling processing on the down-sampling image of the general image at the $L^{th}$ down-sampling iteration, to obtain an up-sampling image $X_1$ of the general image that is outputted by the up-sampling block 1 of the general diffusion model. When j=1, for a second up-sampling iteration, the computer device may invoke an up-sampling block 2 of the general diffusion model, recognize, based on the general image label, the up-sampling image $X_1$, and a down-sampling image of the general image at an $(L-1)^{th}$ down-sampling iteration, a correlation feature a2 between the general image and the general image label at the second up-sampling iteration, and perform, based on the correlation feature a2, up-sampling processing on the down-sampling image of the general image at the $(L-1)^{th}$ down-sampling iteration, to obtain an up-sampling image $X_2$ of the general image that is outputted by the up-sampling block 2 of the general diffusion model. The rest can be deduced by analogy. The foregoing operations are repeated until the correlation features respectively between the general image and the general image label at the L up-sampling iterations are obtained. The correlation features respectively between the general image and the general image label at the L up-sampling iterations are determined as the first-type correlation feature between the general image and the general image label.

In some embodiments, the recognizing, through an up-sampling block j+1 of the general diffusion model based on the general image label, the up-sampling image $X_j$, and the down-sampling image of the general image at the $(L-j)^{th}$ down-sampling iteration, a correlation feature between the general image and the general image label at the $(j+1)^{th}$ up-sampling iteration includes: The computer device may fuse, through the up-sampling block j+1 of the general diffusion model, the up-sampling image $X_j$, and the down-sampling image of the general image at the $(L-j)^{th}$ down-sampling iteration, to obtain a general fused image; and further obtain a text weight and an image weight that are corresponding to the up-sampling block j+1 of the general diffusion model. The text weight and the image weight may refer to weights corresponding to the up-sampling block j+1. Then, weighting processing is performed on a text feature corresponding to the general image label by using the text weight, to obtain a weighted text vector; weighting processing is performed on an image feature of the general fused image by using the image weight, to obtain a weighted image vector; and the correlation feature between the general image and the general image label at the $(j+1)^{th}$ up-sampling iteration is determined based on the weighted text vector and the weighted image vector.

In some embodiments, that the correlation feature between the general image and the general image label at the (j+1)th up-sampling iteration is determined based on the weighted text vector and the weighted image vector includes: The computer device may perform product processing on the weighted text vector and the weighted image vector, to obtain an initial correlation feature between the general image and the general image label at the (j+1)th up-sampling iteration; and then normalize the initial correlation feature between the general image and the general image label at the (j+1)th up-sampling iteration, to obtain a normalized correlation feature, that is, adjust the initial correlation feature between the general image and the general image label at the (j+1)th up-sampling iteration to be within a range less than or equal to 1, to obtain the normalized correlation feature. Further, the correlation feature between the general image and the general image label at the (j+1)th up-sampling iteration is determined based on the normalized correlation feature and a location of the up-sampling block j+1 in the general diffusion model.

For example, the computer device may calculate the correlation feature between the general image and the foregoing general image label at the (j+1)th up-sampling iteration by using the following formula (1):

$$\hat{f}_t^{j+1} = A_t^{j+1} v_t^{j+1} \; where \; A_t^{j+1} = softmax\left(q_t^{j+1} k_t^{j+1^T}\right) \; (1)$$

In the formula (1): $\hat{f}_t^{j+1}$ represents the correlation feature between the general image and the general image label at the (j+1)th up-sampling iteration, $A_t^{j+1}$ represents the normalized correlation feature, $v_t^{j+1}$ represents the location of the up-sampling block j+1 in the general diffusion model, which may, for example, reflect that the up-sampling block j+1 is the (j+1)th up-sampling block in the general diffusion model, $q_t^{j+1}$ represents the weighted image vector, and $k_t^{j+1^T}$ represents a transposition of the weighted text vector $k_t^{j+1}$.

S203: Recognize prediction noise data in the noise-added image of the sample service image through an initial diffusion model based on the first-type correlation feature and a marking service label of the sample service image, a structure of the initial diffusion model being the same as a structure of the general diffusion model.

In this application, the computer device may recognize the prediction noise data in the noise-added image of the sample service image through the initial diffusion model based on the first-type correlation feature and the marking service label of the sample service image, that is, recognize a second-type correlation feature between the sample service image and the marking service label through the initial diffusion model based on the first-type correlation feature and the marking service label, and recognize the prediction noise data in the noise-added image of the sample service image based on the second-type correlation feature. In this way, it is beneficial to enabling the initial diffusion model to have a capability of recognizing a correlation between the sample service image and the marking service label, further enabling the initial diffusion model to have a capability of recognizing a service label of a target service image, and enabling the initial diffusion model to have a capability of processing a particular service (the target service), thereby implementing fine processing of the service and improving service processing accuracy.

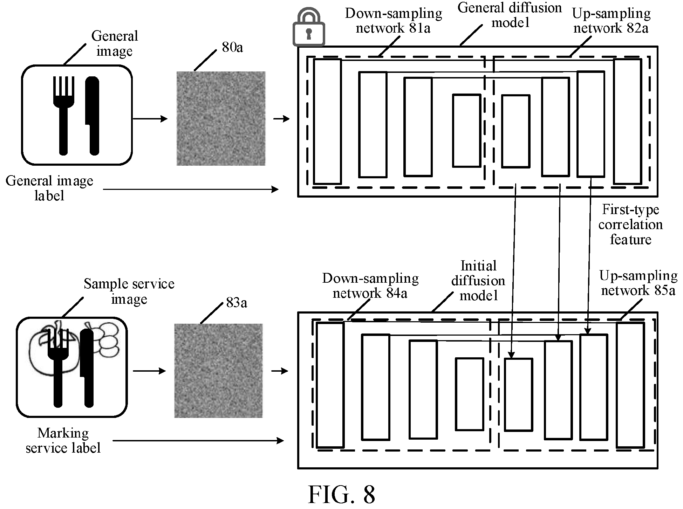

For example, as shown in FIG. 8, a general diffusion model includes a down-sampling network 81a, an up-sampling network 82a, and a noise-adding network (not shown in FIG. 8). An initial diffusion model includes a down-sampling network 84a, an up-sampling network 85a, and a noise-adding network (not shown in FIG. 8). A general image in FIG. 8 includes a knife and a fork. A general image label of the general image is: image including tableware. A sample service image in FIG. 8 includes a knife, a fork, and fruits. A marking service label of the sample service image is: knife and fork. First, the noise-adding network of the general diffusion model may add random noise data corresponding to a random step t to the general image, to obtain a noise-added image 80a of the general image. The down-sampling network 81a may perform down-sampling processing on the noise-added image 80a of the general image based on the general image label, to obtain a down-sampling image of the general image. The up-sampling network 82a may recognize a first-type correlation feature between the general image and the general image label based on the down-sampling image of the general image and the general image label.

Further, as shown in FIG. 8, the noise-adding network of the initial diffusion model may add the random noise data corresponding to the random step t to the sample service image, to obtain a noise-added image 83a of the sample service image. The down-sampling network 84a may perform down-sampling processing on the noise-added image 83a of the sample service image based on the marking service label, to obtain a down-sampling image of the sample service image. The up-sampling network 85a may recognize a second-type correlation feature between the sample service image and the marking service label based on the down-sampling image of the sample service image, the marking service label, and the first-type correlation feature, and recognize prediction noise data in the noise-added image 83a of the sample service image based on the second-type correlation feature.

In some embodiments, the foregoing first-type correlation feature includes a correlation feature between the foregoing general image and the foregoing general image label at the foregoing $(j+1)^{th}$ up-sampling iteration, an up-sampling network of the initial diffusion model includes L up-sampling blocks, and a down-sampling network of the initial diffusion model includes L down-sampling blocks, L being a positive integer greater than 1, and j being a positive integer less than L.

In some embodiments, the foregoing operation S203 includes: obtaining, for the $(j+1)^{th}$ up-sampling iteration, an up-sampling image $Y_j$ of the sample service image that is outputted by an up-sampling block j of the initial diffusion model, the up-sampling image $Y_j$ of the sample service image being obtained based on the noise-added image of the sample service image; and obtaining a down-sampling image of the sample service image that is outputted by a down-sampling block L-j of the initial diffusion model at an $(L-j)^{th}$ down-sampling iteration; recognizing a second-type correlation feature through an up-sampling block j+1 of the initial diffusion model based on the marking service label, the up-sampling image $Y_j$, a correlation feature j+1, and the down-sampling image of the sample service image at the $(L-j)^{th}$ down-sampling iteration, the correlation feature j+1 reflecting a correlation feature between the general image and the general image label at the $(j+1)^{th}$ up-sampling iteration, and the second-type correlation feature reflecting a correlation feature between the sample service image and the marking service label at the $(j+1)^{th}$ up-sampling iteration; and determining the prediction noise data in the noise-added image of the sample service image based on a second-type correlation feature obtained at an $L^{th}$ up-sampling iteration.

For example, for a first down-sampling iteration, the computer device may invoke a down-sampling block 1 of the initial diffusion model to perform down-sampling processing on the noise-added image of the sample service image based on the marking service label, to obtain a down-sampling image of the sample service image at the first down-sampling iteration. For a second down-sampling iteration, the computer device may invoke a down-sampling block 2 of the initial diffusion model to perform, based on the marking service label, down-sampling processing on the down-sampling image of the sample service image at the first down-sampling iteration, to obtain a down-sampling image of the sample service image at the second down-sampling iteration. The rest can be deduced by analogy. The foregoing operations are repeated until down-sampling images respectively corresponding to the sample service image at L down-sampling iterations are obtained.

Further, when j=0, for a first up-sampling iteration, the computer device may invoke an up-sampling block 1 of the initial diffusion model; recognize, based on the marking service label, the foregoing correlation feature a1, and a down-sampling image of the sample service image at an $L^{th}$ down-sampling iteration, a second-type correlation feature b1 between the sample service image and the marking service label at the first up-sampling iteration; and perform up-sampling processing on the down-sampling image of the sample service image at the $L^{th}$ down-sampling iteration based on the second-type correlation feature b1, to obtain an up-sampling image $Y_1$ of the sample service image that is outputted by the up-sampling block 1 of the initial diffusion model. When j=1, for a second up-sampling iteration, the computer device may invoke an up-sampling block 2 of the initial diffusion model; recognize, based on the marking service label, the foregoing correlation feature a2, the up-sampling image $Y_1$, and a down-sampling image of the sample service image at an $(L-1)^{th}$ down-sampling iteration, a second-type correlation feature b2 between the sample service image and the marking service label at the second up-sampling iteration; and perform, based on the second-type correlation feature b2, up-sampling processing on the down-sampling image of the sample service image at the $(L-1)^{th}$ down-sampling iteration, to obtain an up-sampling image $Y_2$ of the sample service image that is outputted by the up-sampling block 2 of the initial diffusion model. The rest can be deduced by analogy. The foregoing operations are repeated until the second-type correlation feature at the $L^{th}$ up-sampling iteration is obtained, and up-sampling processing is performed on the down-sampling image of the sample service image at the first down-sampling iteration based on the second-type correlation feature obtained at the $L^{th}$ up-sampling iteration, to obtain an up-sampling image $Y_L$ of the sample service image that is outputted by an up-sampling block L of the initial diffusion model. The prediction noise data in the noise-added image of the sample service image is determined based on the up-sampling image $Y_L$ of the sample service image.

In some embodiments, the recognizing a second-type correlation feature through an up-sampling block j+1 of the initial diffusion model based on the marking service label, the up-sampling image $Y_j$, a correlation feature j+1, and the down-sampling image of the sample service image at the $(L-j)^{th}$ down-sampling iteration includes: The computer device may fuse, through the up-sampling block j+1 of the initial diffusion model, the up-sampling image $Y_j$ and the down-sampling image of the sample service image at the $(L-j)^{th}$ down-sampling iteration, to obtain a service fused image; and further fuse the correlation feature j+1 and an image feature of the service fused image, to obtain an image fused feature. The fusion herein may refer to accumulation processing or averaging processing. Further, the computer device may recognize the marking service label and the image fused feature through the up-sampling block j+1 of the initial diffusion model, to obtain the second-type correlation feature. The first-type correlation feature of the general diffusion model is embedded (fused) in a process of training the initial diffusion model. This is beneficial to obtaining, through training by using less training data, a service diffusion model configured for processing the target service, thereby improving accuracy of recognizing the label by the service diffusion model and training efficiency of the service diffusion model.

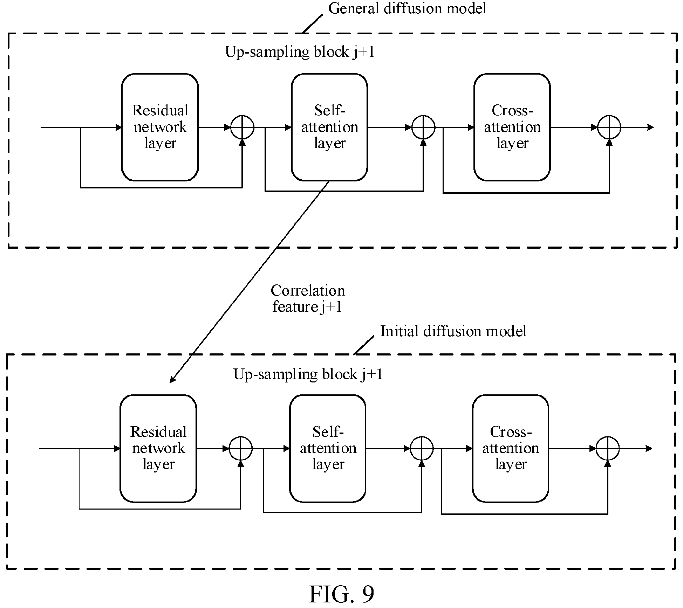

In some embodiments, as shown in FIG. 9, an up-sampling block of a general diffusion model and an up-sampling block of an initial diffusion model each include a residual network layer, a self-attention layer, and a cross-attention layer. The residual network layer is configured for fusing a down-sampling image that is outputted by a corresponding down-sampling block and an up-sampling image of the up-sampling block. The self-attention network layer is configured for recognizing a correlation feature between an image and a text label based on a fused image of the residual network layer. The cross-attention layer is configured for performing, based on a correlation feature that is outputted by the self-attention layer, up-sampling processing on the down-sampling image that is outputted by the corresponding down-sampling block, to obtain the up-sampling image. For example, the correlation feature obtained through the up-sampling block of the general diffusion model is fused into the corresponding up-sampling block in the initial diffusion model. An up-sampling block j+1 of the general diffusion model and an up-sampling block j+1 of the initial diffusion model are used as an example for description. An up-sampling image $X_j$ and a down-sampling image of a general image at an $(L-j)^{th}$ down-sampling iteration are fused through the residual network layer of the up-sampling block j+1 of the general diffusion model, to obtain a general fused image. A text weight and an image weight that are corresponding to the up-sampling block j+1 of the general diffusion model are obtained through the self-attention layer of the up-sampling block j+1 of the general diffusion model. The text weight and the image weight may refer to weights corresponding to the up-sampling block j+1. Then, weighting processing is performed on a text feature corresponding to a general image label by using the text weight, to obtain a weighted text vector, weighting processing is performed on an image feature of the general fused image by using the image weight, to obtain a weighted image vector, and a correlation feature (marked as a correlation feature j+1) between the general image and the general image label at a $(j+1)^{th}$ up-sampling iteration is determined based on the weighted text vector and the weighted image vector. The cross-attention layer of the up-sampling block j+1 of the general diffusion model performs, based on the correlation feature j+1, up-sampling processing on the down-sampling image of the general image at the $(L-j)^{th}$ down-sampling iteration, to obtain an up-sampling image $X_{j+1}$ of the general image that is outputted by the up-sampling block j+1 of the general diffusion model.

Correspondingly, an up-sampling image $Y_j$ and a down-sampling image of a sample service image at the $(L-j)^{th}$ down-sampling iteration are fused through the residual network layer of the up-sampling block j+1 of the initial diffusion model, to obtain a service fused image, and the correlation feature j+1 and an image feature of the service fused image are fused, to obtain an image fused feature. A marking service label and the image fused feature are recognized through the self-attention layer of the up-sampling block j+1 of the initial diffusion model, to obtain a second-type correlation feature. For an implementation process of obtaining the second-type correlation feature through the self-attention layer of the up-sampling block j+1 of the initial diffusion model, refer to an implementation process of obtaining the correlation feature j+1 through the self-attention layer of the up-sampling block j+1 of the general diffusion model. Details are not described herein again. Up-sampling processing is performed on the down-sampling image of the sample service image at the $(L-j)^{th}$ down-sampling iteration through the cross-attention layer of the up-sampling block j+1 of the initial diffusion model based on the second-type correlation feature, to obtain an up-sampling image $Y_{j+1}$ of the sample service image that is outputted by the up-sampling block j+1 of the initial diffusion model. The rest can be deduced by analogy. The foregoing operations are repeated until an up-sampling image $Y_L$ of the sample service image that is outputted by an up-sampling block L of the initial diffusion model is obtained. The up-sampling image $Y_L$ may be referred to as a denoised image of the sample service image. Subtraction processing is performed based on a noise-added image of the sample service image and the denoised image of the sample service image, to obtain prediction noise data in the noise-added image of the sample service image.

S204: Train the initial diffusion model based on the prediction noise data and the random noise data corresponding to the random step t, to obtain the service diffusion model.

In some embodiments, the foregoing operation S204 includes: The computer device may calculate a noise prediction error of the initial diffusion model based on the prediction noise data and the random noise data corresponding to the random step t. The noise prediction error is configured for reflecting a denoising capability of the initial diffusion model. That is, the noise prediction error is configured for reflecting a capability of the initial diffusion model recognizing a correlation feature between the marking service label and the sample service image, that is, the noise prediction error is configured for reflecting accuracy of recognizing a service label of the target service by the initial diffusion model. For example, a lower noise prediction error indicates a stronger capability of the initial diffusion model recognizing the correlation feature between the marking service label and the sample service image, that is, indicates higher accuracy of the initial diffusion model recognizing the service label of the target service. On the contrary, a higher noise prediction error indicates a weaker capability of the initial diffusion model recognizing the correlation feature between the marking service label and the sample service image, that is, indicates lower accuracy of the initial diffusion model recognizing the service label of the target service. Therefore, the computer device may determine a convergence state of the initial diffusion model based on the noise prediction error. The convergence state includes a non-converged state or a converged state. The non-converged state refers to that the noise prediction error of the initial diffusion model is greater than an error threshold. The converged state refers to that the noise prediction error of the initial diffusion model is less than or equal to the error threshold. The error threshold may refer to a lowest noise prediction error of the initial diffusion model. The lowest noise prediction error is determined based on a loss function of the initial diffusion model. If the initial diffusion model is in the converged state, the initial diffusion model may be directly determined as the service diffusion model. If the initial diffusion model is in the non-converged state, the up-sampling network of the initial diffusion model is trained based on the noise prediction error, to obtain the service diffusion model. In other words, in a process of training the initial diffusion model, only the up-sampling network of the initial diffusion model needs to be trained by embedding the second-type correlation feature recognized by the general diffusion model, that is, only fine adjustment needs to be performed on the up-sampling network of the initial diffusion model, to obtain the service diffusion model, thereby improving training efficiency of the service diffusion model.

In some embodiments, that if the initial diffusion model is in the non-converged state, the up-sampling network of the initial diffusion model is trained based on the noise prediction error, to obtain the service diffusion model includes: The computer device may adjust a weight of the up-sampling network of the initial diffusion model based on the noise prediction error if the initial diffusion model is in the non-converged state, to obtain an adjusted initial diffusion model; further recognize noise data in a noise-added image feature of the sample service image through the adjusted initial diffusion model based on the first-type correlation feature and the marking service label of the sample service image; and determine the noise data obtained through recognition as updated noise data. Then, an up-sampling network of the adjusted initial diffusion model is trained based on the updated noise data and the random noise data corresponding to the random step t, and until the adjusted initial diffusion model is in the converged state, the adjusted initial diffusion model in the converged state is determined as the service diffusion model.

S205: Obtain a target service image and N candidate service labels that are associated with the target service, N being a positive integer greater than 1.

S206: Add random noise data corresponding to K time steps to the target service image, to obtain K noise-added images of the target service image, K being a positive integer greater than 1.

S207: Output the N candidate service labels and the K noise-added images of the target service image to the service diffusion model, and denoise the K noise-added images of the target service image based on a candidate service label i through the service diffusion model, to obtain denoised images respectively corresponding to the candidate service label i in the K time steps, i being a positive integer less than or equal to N, and N being a positive integer greater than 1.

S208: Fuse the denoised images respectively corresponding to the candidate service label i in the K time steps, to obtain a fused denoised image corresponding to the candidate service label i.

S209: Determine a target service label of the target service image from the N candidate service labels based on fused denoised images respectively corresponding to the N candidate service labels.

For explanations and descriptions of operation S205 to operation S209, reference may be made to the foregoing embodiments. Details are not described herein again.

In this application, the computer device may obtain a general diffusion model that has been trained in advance. The general diffusion model is obtained through training based on the general image and the general image label. The general diffusion model has a capability of recognizing the general image label of the general image. There is a similarity between the general image label and an actual label (namely, the marking service label) of the target service. In other words, the general diffusion model has a rough capability of recognizing the marking service label of the target service. Therefore, the computer device can obtain, only by embedding a small quantity of marking service labels of the target service into the general diffusion model, the service diffusion model configured for recognizing the service label of the target service, so that the service diffusion model has a refined capability of recognizing the marking service label, that is, the service diffusion model has a refined capability of recognizing the label of the target service. In this way, not only accuracy of recognizing the label by the service diffusion model is improved, but also training efficiency of the service diffusion model is improved, costs are reduced, and there is no need to completely depend on the marking service label to retrain the service diffusion model from scratch.

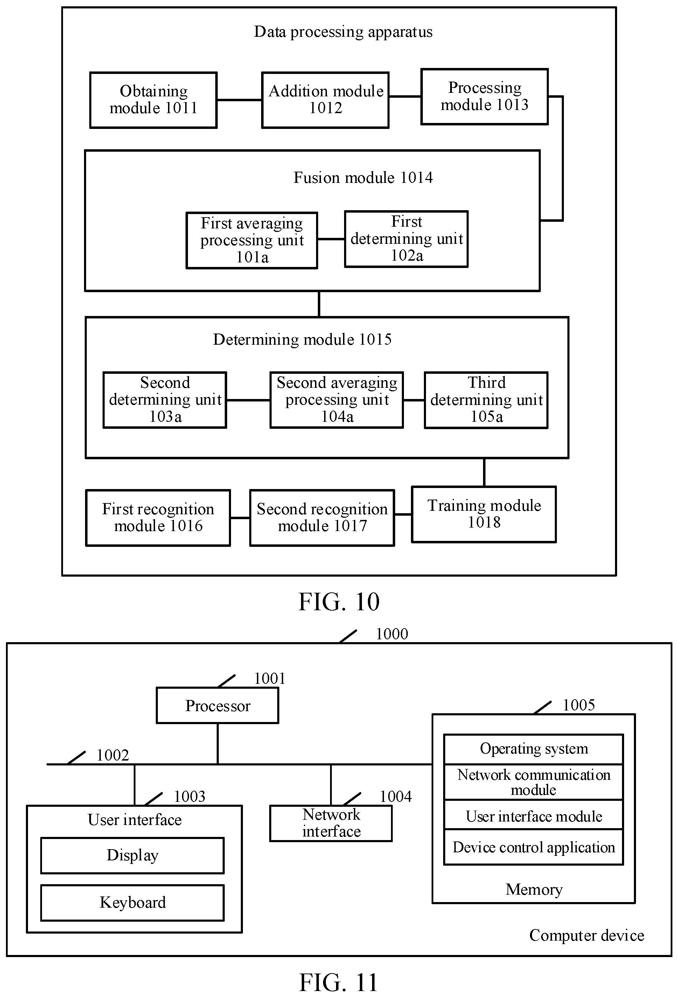

FIG. 10 is a schematic structural diagram of a data processing apparatus according to an embodiment of this application. As shown in FIG. 10, the data processing apparatus may include:

an obtaining module 1011, configured to obtain a target service image and N candidate service labels that are associated with a target service, N being a positive integer greater than 1;

an addition module 1012, configured to add random noise data corresponding to K time steps to the target service image, to obtain K noise-added images of the target service image, K being a positive integer greater than 1;

a processing module 1013, configured to: output the N candidate service labels and the K noise-added images of the target service image to a service diffusion model, and denoise the K noise-added images of the target service image based on a candidate service label i through the service diffusion model, to obtain denoised images respectively corresponding to the candidate service label i in the K time steps, i being a positive integer less than or equal to N, and N being a positive integer greater than 1;

a fusion module 1014, configured to fuse the denoised images respectively corresponding to the candidate service label i in the K time steps, to obtain a fused denoised image corresponding to the candidate service label i; and

a determining module 1015, configured to determine a target service label of the target service image from the N candidate service labels based on fused denoised images respectively corresponding to the N candidate service labels.

In some embodiments, the fusion module 1014 may include a first averaging processing unit 101a and a first determining unit 102a.

The first averaging processing unit 101a is configured to perform averaging processing on the denoised images respectively corresponding to the candidate service label i in the K time steps, to obtain an average denoised image corresponding to the candidate service label i.

The first determining unit 102a is configured to determine the average denoised image corresponding to the candidate service label i as the fused denoised image corresponding to the candidate service label i.

In some embodiments, the determining module 1015 includes a second determining unit 103a, a second averaging processing unit 104a, and a third determining unit 105a.

The second determining unit 103a is configured to: determine, based on the fused denoised images respectively corresponding to the N candidate service labels, initial service feature values respectively corresponding to the N candidate service labels, for any one of the N candidate service labels, the initial service feature value corresponding to the candidate service label being configured for measuring quality of the fused denoised image corresponding to the candidate service label.

The second averaging processing unit 104a is configured to perform averaging processing on the initial service feature values respectively corresponding to the N candidate service labels, to obtain an average service feature value.

The third determining unit 105a is configured to determine a candidate service label of the N candidate service labels whose initial service feature value is greater than the average service feature value as the target service label of the target service image.

In some embodiments, the second determining unit 103a is specifically configured to: accumulate pixel values in the fused denoised image corresponding to the candidate service label i, to obtain a total pixel value corresponding to the candidate service label i; and determine the total pixel value corresponding to the candidate service label i as an initial service feature value corresponding to the candidate service label i.

The addition module 1012 is configured to: add random noise data corresponding to a random step t to a sample service image associated with the target service, to obtain a noise-added image of the sample service image; and add the random noise data corresponding to the random step t to a general image, to obtain a noise-added image of the general image, t being a positive integer.

A first recognition module 1016 is configured to recognize a first-type correlation feature between the general image and a general image label of the general image through a general diffusion model based on the noise-added image of the general image.

A second recognition module 1017 is configured to recognize prediction noise data in the noise-added image of the sample service image through an initial diffusion model based on the first-type correlation feature and a marking service label of the sample service image, a structure of the initial diffusion model being the same as a structure of the general diffusion model.

A training module 1018 is configured to train the initial diffusion model based on the prediction noise data and the random noise data corresponding to the random step t, to obtain the service diffusion model.

In some embodiments, an up-sampling network of the general diffusion model includes L up-sampling blocks, and a down-sampling network of the general diffusion model includes L down-sampling blocks, L being a positive integer greater than 1; and

the recognizing, by the first recognition module 1016, a first-type correlation feature between the general image and a general image label of the general image through a general diffusion model based on the noise-added image of the general image includes:

obtaining, for a $(j+1)^{th}$ up-sampling iteration, an up-sampling image $X_j$ of the general image that is outputted by an up-sampling block j of the general diffusion model, the up-sampling image $X_j$ of the general image being obtained based on the noise-added image of the general image, and j being a positive integer less than L;

obtaining a down-sampling image of the general image that is outputted by a down-sampling block L-j of the general diffusion model at an $(L-j)^{th}$ down-sampling iteration;

recognizing, through an up-sampling block j+1 of the general diffusion model based on the general image label, the up-

sampling image $X_j$, and the down-sampling image of the general image at the $(L-j)^{th}$ down-sampling iteration, a correlation feature between the general image and the general image label at the $(j+1)^{th}$ up-sampling iteration; and

determining correlation features respectively between the general image and the general image label at L up-sampling iterations as the first-type correlation feature between the general image and the general image label.

In some embodiments, the recognizing, by the first recognition module 1016 through an up-sampling block j+1 of the general diffusion model based on the general image label, the up-sampling image $X_j$, and the down-sampling image of the general image at the $(L-j)^{th}$ down-sampling iteration, a correlation feature between the general image and the general image label at the $(j+1)^{th}$ up-sampling iteration includes:

fusing, through the up-sampling block j+1 of the general diffusion model, the up-sampling image $X_j$, and the down-sampling image of the general image at the $(L-j)^{th}$ down-sampling iteration, to obtain a general fused image;

obtaining a text weight and an image weight that are corresponding to the up-sampling block j+1 of the general diffusion model;

performing weighting processing on a text feature corresponding to the general image label by using the text weight, to obtain a weighted text vector;

performing weighting processing on an image feature of the general fused image by using the image weight, to obtain a weighted image vector; and

determining the correlation feature between the general image and the general image label at the $(j+1)^{th}$ up-sampling iteration based on the weighted text vector and the weighted image vector.

In some embodiments, the determining, by the first recognition module 1016, the correlation feature between the general image and the general image label at the $(j+1)^{th}$ up-sampling iteration based on the weighted text vector and the weighted image vector includes:

performing product processing on the weighted text vector and the weighted image vector, to obtain an initial correlation feature between the general image and the general image label at the $(j+1)^{th}$ up-sampling iteration;

normalizing the initial correlation feature between the general image and the general image label at the $(j+1)^{th}$ up-sampling iteration, to obtain a normalized correlation feature; and

determining the correlation feature between the general image and the general image label at the $(j+1)^{th}$ up-sampling iteration based on the normalized correlation feature and a location of the up-sampling block j+1 in the general diffusion model.

In some embodiments, the first-type correlation feature includes a correlation feature between the general image and the general image label at a $(j+1)^{th}$ up-sampling iteration, an up-sampling network of the initial diffusion model includes L up-sampling blocks, and a down-sampling network of the initial diffusion model includes L down-sampling blocks, L being a positive integer greater than 1, and j being a positive integer less than L; and

the recognizing, by the second recognition module 1017, prediction noise data in the noise-added image of the sample service image through an initial diffusion model based on the first-type correlation feature and a marking service label of the sample service image includes:

obtaining, for the $(j+1)^{th}$ up-sampling iteration, an up-sampling image $Y_j$ of the sample service image that is outputted by an up-sampling block j of the initial diffusion model, the up-sampling image $Y_j$ of the sample service image being obtained based on the noise-added image of the sample service image;

obtaining a down-sampling image of the sample service image that is outputted by a down-sampling block L-j of the initial diffusion model at an $(L-j)^{th}$ down-sampling iteration;

recognizing a second-type correlation feature through an up-sampling block j+1 of the initial diffusion model based on the marking service label, the up-sampling image $Y_j$, a correlation feature j+1, and the down-sampling image of the sample service image at the (L-j)$^{th}$ down-sampling iteration, the correlation feature j+1 reflecting a correlation feature between the general image and the general image label at the (j+1)$^{th}$ up-sampling iteration, and the second-type correlation feature reflecting a correlation feature between the sample service image and the marking service label at the (j+1)$^{th}$ up-sampling iteration; and

determining the prediction noise data in the noise-added image of the sample service image based on a second-type correlation feature obtained at an L$^{th}$ up-sampling iteration.

In some embodiments, the recognizing, by the second recognition module 1017, a second-type correlation feature through an up-sampling block j+1 of the initial diffusion model based on the marking service label, the up-sampling image $Y_j$, a correlation feature j+1, and the down-sampling image of the sample service image at the (L-j)$^{th}$ down-sampling iteration includes:

fusing, through the up-sampling block j+1 of the initial diffusion model, the up-sampling image $Y_j$ and the down-sampling image of the sample service image at the (L-j)$^{th}$ down-sampling iteration, to obtain a service fused image;

fusing the correlation feature j+1 and an image feature of the service fused image, to obtain an image fused feature; and

recognizing the marking service label and the image fused feature through the up-sampling block j+1 of the initial diffusion model, to obtain the second-type correlation feature.

In some embodiments, the initial diffusion model includes an up-sampling network, and the training, by the training module 1018, the initial diffusion model based on the prediction noise data and the random noise data corresponding to the random step t, to obtain the service diffusion model includes:

calculating a noise prediction error of the initial diffusion model based on the prediction noise data and the random noise data corresponding to the random step t;

determining a convergence state of the initial diffusion model based on the noise prediction error; and

training the up-sampling network of the initial diffusion model based on the noise prediction error if the initial diffusion model is in a non-converged state, to obtain the service diffusion model.

In some embodiments, the training, by the training module 1018, the up-sampling network of the initial diffusion model based on the noise prediction error if the initial diffusion model is in a non-converged state, to obtain the service diffusion model includes:

adjusting a weight of the up-sampling network of the initial diffusion model based on the noise prediction error if the initial diffusion model is in the non-converged state, to obtain an adjusted initial diffusion model;

recognizing updated noise data in a noise-added image feature of the sample service image through the adjusted initial diffusion model based on the first-type correlation feature and the marking service label of the sample service image;

training an up-sampling network of the adjusted initial diffusion model based on the updated noise data and the random noise data corresponding to the random step t; and

determining, until the adjusted initial diffusion model is in a converged state, the adjusted initial diffusion model in the converged state as the service diffusion model.

In this application, the target service label of the target service image has a strong one-to-one correspondence with a space (namely, an image region) of the target service image, that is, one target service label corresponds to one image region in the target service image. Therefore, a computer device may input a plurality of candidate service labels (namely, the N candidate service labels) into the service diffusion model at the same time. The service diffusion model determines, based on denoised images corresponding to each candidate service labels in different time steps (namely, the K time steps), a fused denoised image corresponding to a corresponding candidate service label, and determines the target service label of the target service image from the N candidate service labels based on the fused denoised images respectively corresponding to the N candidate service labels. It can be learned that, the plurality of candidate service labels do not need to be inputted one by one, which is beneficial to quickly recognizing the one or more target service labels of the target service image, reducing time consumption of recognizing the label by the service diffusion model, and improving efficiency of recognizing the label by the service diffusion model.

FIG. 11 is a schematic structural diagram of a computer device according to an embodiment of this application. As shown in FIG. 11, the foregoing computer device 1000 may specifically refer to the first device in the foregoing method, and may be a terminal or a server, including a processor 1001, a network interface 1004, and a memory 1005. In addition, the foregoing computer device 1000 may further include a user interface 1003, and at least one communication bus 1002. The communication bus 1002 is configured to implement connection and communication between the components. In some embodiments, the user interface 1003 may include a display and a keyboard. In some embodiments, the user interface 1003 may further include a standard wired interface and a standard wireless interface. In some embodiments, the network interface 1004 may include the standard wired interface and the standard wireless interface (such as a Wi-Fi interface). The memory 1005 may be a high-speed RAM memory, or may be a non-volatile memory, for example, at least one magnetic disk memory. In some embodiments, the memory 1005 may further be at least one storage apparatus away from the foregoing processor 1001. As shown in FIG. 11, the memory 1005 used as a computer-readable storage medium may include an operating system, a network communication module, a user interface module, and a computer application.

In the computer device 1000 shown in FIG. 11, the network interface 1004 may provide a network communication function. The user interface 1003 is mainly configured to provide an input interface. The processor 1001 may be configured to invoke the computer application stored in the memory 1005, to:

obtain a target service image and N candidate service labels that are associated with a target service, N being a positive integer greater than 1;

add random noise data corresponding to K time steps to the target service image, to obtain K noise-added images of the target service image, K being a positive integer greater than 1;

output the N candidate service labels and the K noise-added images of the target service image to a service diffusion model, and denoise the K noise-added images of the target service image based on a candidate service label i through the service diffusion model, to obtain denoised images respectively corresponding to the candidate service label i in the K time steps, i being a positive integer less than or equal to N, and N being a positive integer greater than 1;

fuse the denoised images respectively corresponding to the candidate service label i in the K time steps, to obtain a fused denoised image corresponding to the candidate service label i; and

determine a target service label of the target service image from the N candidate service labels based on fused denoised images respectively corresponding to the N candidate service labels.

In some embodiments, that the processor 1001 may be configured to invoke the computer application program stored in the memory 1005, to fuse the denoised images respectively corresponding to the candidate service label i in the K time steps, to obtain a fused denoised image corresponding to the candidate service label i includes:

performing averaging processing on the denoised images respectively corresponding to the candidate service label i in the K time steps, to obtain an average denoised image corresponding to the candidate service label i; and

determining the average denoised image corresponding to the candidate service label i as the fused denoised image corresponding to the candidate service label i.

In some embodiments, that the processor 1001 may be configured to invoke the computer application program stored in the memory 1005, to determine a target service label of the target service image from the N candidate service labels based on fused denoised images respectively corresponding to the N candidate service labels includes:

determining, based on the fused denoised images respectively corresponding to the N candidate service labels, initial service feature values respectively corresponding to the N candidate service labels, for any one of the N candidate service labels, the initial service feature value corresponding to the candidate service label being configured for measuring quality of the fused denoised image corresponding to the candidate service label;

performing averaging processing on the initial service feature values respectively corresponding to the N candidate service labels, to obtain an average service feature value; and

determining a candidate service label of the N candidate service labels whose initial service feature value is greater than the average service feature value as the target service label of the target service image.

In some embodiments, that the processor 1001 may be configured to invoke the computer application program stored in the memory 1005, to determine, based on the fused denoised images respectively corresponding to the N candidate service labels, initial service feature values respectively corresponding to the N candidate service labels includes: accumulating pixel values in the fused denoised image corresponding to the candidate service label i, to obtain a total pixel value corresponding to the candidate service label i; and determining the total pixel value corresponding to the candidate service label i as an initial service feature value corresponding to the candidate service label i.

In some embodiments, the processor 1001 may be configured to invoke the computer application program stored in the memory 1005, to:

add random noise data corresponding to a random step t to a sample service image associated with the target service, to obtain a noise-added image of the sample service image; and add the random noise data corresponding to the random step t to a general image, to obtain a noise-added image of the general image, t being a positive integer;

recognize a first-type correlation feature between the general image and a general image label of the general image through a general diffusion model based on the noise-added image of the general image;

recognize prediction noise data in the noise-added image of the sample service image through an initial diffusion model based on the first-type correlation feature and a marking service label of the sample service image, a structure of the initial diffusion model being the same as a structure of the general diffusion model; and

train the initial diffusion model based on the prediction noise data and the random noise data corresponding to the random step t, to obtain the service diffusion model.

In some embodiments, an up-sampling network of the general diffusion model includes L up-sampling blocks, and a down-sampling network of the general diffusion model includes L down-sampling blocks, L being a positive integer greater than 1

In some embodiments, that the processor 1001 may be configured to invoke the computer application program stored in the memory 1005, to recognize a first-type correlation feature between the general image and a general image label of the general image through a general diffusion model based on the noise-added image of the general image includes:

obtaining, for a $(j+1)^{th}$ up-sampling iteration, an up-sampling image $X_j$ of the general image that is outputted by an up-sampling block j of the general diffusion model, the up-sampling image $X_j$ of the general image being obtained based on the noise-added image of the general image, and j being a positive integer less than L;

obtaining a down-sampling image of the general image that is outputted by a down-sampling block L-j of the general diffusion model at an $(L-j)^{th}$ down-sampling iteration;

recognizing, through an up-sampling block j+1 of the general diffusion model based on the general image label, the up-sampling image $X_j$, and the down-sampling image of the general image at the $(L-j)^{th}$ down-sampling iteration, a correlation feature between the general image and the general image label at the $(j+1)^{th}$ up-sampling iteration; and

determining correlation features respectively between the general image and the general image label at L up-sampling iterations as the first-type correlation feature between the general image and the general image label.

In some embodiments, that the processor 1001 may be configured to invoke the computer application program stored in the memory 1005, to recognize, through an up-sampling block j+1 of the general diffusion model based on the general image label, the up-sampling image $X_j$, and the down-sampling image of the general image at the $(L-j)^{th}$ down-sampling iteration, a correlation feature between the general image and the general image label at the $(j+1)^{th}$ up-sampling iteration includes:

fusing, through the up-sampling block j+1 of the general diffusion model, the up-sampling image $X_j$, and the down-sampling image of the general image at the $(L-j)^{th}$ down-sampling iteration, to obtain a general fused image;

obtaining a text weight and an image weight that are corresponding to the up-sampling block j+1 of the general diffusion model;

performing weighting processing on a text feature corresponding to the general image label by using the text weight, to obtain a weighted text vector;

performing weighting processing on an image feature of the general fused image by using the image weight, to obtain a weighted image vector; and

determining the correlation feature between the general image and the general image label at the $(j+1)^{th}$ up-sampling iteration based on the weighted text vector and the weighted image vector.

In some embodiments, that the processor 1001 may be configured to invoke the computer application program stored in the memory 1005, to determine the correlation feature between the general image and the general image label at the $(j+1)^{th}$ up-sampling iteration based on the weighted text vector and the weighted image vector includes:

performing product processing on the weighted text vector and the weighted image vector, to obtain an initial correlation feature between the general image and the general image label at the $(j+1)^{th}$ up-sampling iteration;

normalizing the initial correlation feature between the general image and the general image label at the $(j+1)^{th}$ up-sampling iteration, to obtain a normalized correlation feature; and

determining the correlation feature between the general image and the general image label at the $(j+1)^{th}$ up-sampling iteration based on the normalized correlation feature and a location of the up-sampling block j+1 in the general diffusion model.

In some embodiments, the first-type correlation feature includes a correlation feature between the general image and the general image label at a $(j+1)^{th}$ up-sampling iteration, an up-sampling network of the initial diffusion model includes L up-sampling blocks, and a down-sampling network of the initial diffusion model includes L down-sampling blocks, L being a positive integer greater than 1, and j being a positive integer less than L; and

In some embodiments, that the processor 1001 may be configured to invoke the computer application program stored in the memory 1005, to recognize prediction noise data in the noise-added image of the sample service image through an initial diffusion model based on the first-type correlation feature and a marking service label of the sample service image includes:

obtaining, for the $(j+1)^{th}$ up-sampling iteration, an up-sampling image $Y_j$ of the sample service image that is outputted by an up-sampling block j of the initial diffusion model, the up-sampling image $Y_j$ of the sample service image being obtained based on the noise-added image of the sample service image;

obtaining a down-sampling image of the sample service image that is outputted by a down-sampling block L-j of the initial diffusion model at an $(L-j)^{th}$ down-sampling iteration;

recognizing a second-type correlation feature through an up-sampling block j+1 of the initial diffusion model based on the marking service label, the up-sampling image $Y_j$, a correlation feature j+1, and a down-sampling image of the sample service image at the $(L-j)^{th}$ down-sampling iteration, the correlation feature j+1 reflecting a correlation feature between the general image and the general image label at the $(j+1)^{th}$ up-sampling iteration, and the second-type correlation feature reflecting a correlation feature between the sample service image and the marking service label at the $(j+1)^{th}$ up-sampling iteration; and

determining the prediction noise data in the noise-added image of the sample service image based on a second-type correlation feature obtained at an $L^{th}$ up-sampling iteration.

In some embodiments, that the processor 1001 may be configured to invoke the computer application program stored in the memory 1005, to recognize a second-type correlation feature through an up-sampling block j+1 of the initial diffusion model based on the marking service label, the up-sampling image $Y_j$, the correlation feature j+1, and the down-sampling image of the sample service image at the $(L-j)^{th}$ down-sampling iteration includes:

fusing, through the up-sampling block j+1 of the initial diffusion model, the up-sampling image $Y_j$ and the down-sampling image of the sample service image at the $(L-j)^{th}$ down-sampling iteration, to obtain a service fused image;

fusing the correlation feature j+1 and an image feature of the service fused image, to obtain an image fused feature; and

recognizing the marking service label and the image fused feature through the up-sampling block j+1 of the initial diffusion model, to obtain the second-type correlation feature.

In some embodiments, the initial diffusion model includes an up-sampling network, and that the processor 1001 may be configured to invoke the computer application program stored in the memory 1005, to train the initial diffusion model based on the prediction noise data and the random noise data corresponding to the random step t, to obtain the service diffusion model includes:

calculating a noise prediction error of the initial diffusion model based on the prediction noise data and the random noise data corresponding to the random step t;

determining a convergence state of the initial diffusion model based on the noise prediction error; and

training an up-sampling network of the initial diffusion model based on the noise prediction error if the initial diffusion model is in a non-converged state, to obtain the service diffusion model.

In some embodiments, that the processor 1001 may be configured to invoke the computer application program stored in the memory 1005, to train an up-sampling network of the initial diffusion model based on the noise prediction error if the initial diffusion model is in a non-converged state, to obtain the service diffusion model includes:

adjusting a weight of the up-sampling network of the initial diffusion model based on the noise prediction error if the initial diffusion model is in the non-converged state, to obtain an adjusted initial diffusion model;

recognizing updated noise data in a noise-added image feature of the sample service image through the adjusted initial diffusion model based on the first-type correlation feature and the marking service label of the sample service image;

training an up-sampling network of the adjusted initial diffusion model based on the updated noise data and the random noise data corresponding to the random step t; and

determining, until the adjusted initial diffusion model is in a converged state, the adjusted initial diffusion model in the converged state as the service diffusion model.

In this application, the target service label of the target service image has a strong one-to-one correspondence with a space (namely, an image region) of the target service image, that is, one target service label corresponds to one image region in the target service image. Therefore, the computer device may input a plurality of candidate service labels (namely, the N candidate service labels) into the service diffusion model at the same time. The service diffusion model determines, based on the denoised images corresponding to each candidate service labels in different time steps (namely, the K time steps), a fused denoised image corresponding to a corresponding candidate service label, and determines the target service label of the target service image from the N candidate service labels based on the fused denoised images respectively corresponding to the N candidate service labels. It can be learned that, the plurality of candidate service labels do not need to be inputted one by one, which is beneficial to quickly recognizing the one or more target service labels of the target service image, reducing time consumption of recognizing the label by the service diffusion model, and improving efficiency of recognizing the label by the service diffusion model.

The computer device described in this embodiment of this application may perform the foregoing descriptions of the data processing method in the foregoing corresponding embodiments, and may also perform the foregoing descriptions of the data processing apparatus in the foregoing corresponding embodiments. Details are not described herein again. In addition, beneficial effects of using the same method are described. Details are not described again.

In addition, the embodiments of this application further provide a computer-readable storage medium. The computer-readable storage medium stores a computer program executed by the data processing apparatus. The computer program includes program instructions. When executing the program instructions, a processor can perform the descriptions of the data processing method in the foregoing corresponding embodiments. Therefore, details are not described herein again. In addition, beneficial effects of using the same method are described. Details are not described again. For technical details not disclosed in the embodiment of the computer-readable storage medium involved in this application, refer to the descriptions of the method embodiments of this application.

For example, the foregoing program instructions may be deployed on one computer device for execution, or deployed on at least two computer devices at one location for execution, or deployed on at least two computer devices that are distributed at least two locations and interconnected by a communication network for execution. The at least two computer devices that are distributed at the at least two locations and interconnected by the communication network may form a blockchain network.

The foregoing computer-readable storage medium may be a data processing apparatus according to any one of the foregoing embodiments or an intermediate storage unit of the foregoing computer device, for example, a hard disk or an internal memory of the computer device. The computer-readable storage medium may alternatively be an external storage device of the computer device, for example, a plug-in hard disk, a smart Media card (SMC), a secure digital (SD) card, or a flash card equipped on the computer device. Further, the computer-readable storage medium may further include both an intermediate storage unit and an external storage device of the computer device. The computer-readable storage medium is configured to store the computer program and other programs and data required by the computer device. The computer-readable storage medium may be further configured to temporarily store data that has been outputted or that is to be outputted.

In the specification, claims, and accompanying drawings of the present this embodiment, the terms such as "first" and "second" are intended to distinguish between different in the accommodation defined as than indicate a particular order. In the specification, claims, and accompanying drawings of the embodiments of this application such as the terms "first", "second", and the like are used to distinguish between different media contents, rather than indicate a specific order. In addition, the terms "include" and any variant thereof are intended to cover a non-exclusive inclusion. For example, a process, method, apparatus, product, or device that comprises a series of steps or units is not limited to the listed steps or modules; and instead, further exemplarily comprises a step or module that is not listed, or further exemplarily comprises another step or unit that is intrinsic to the process, method, apparatus, product, or device.

In this application, related data collection processing needs to be strictly performed according to related national laws and regulations during application of the examples, informed consent or separate consent of personal information subjects is obtained, and subsequent data use and processing are carried out within the scope of authorization of laws, regulations and personal information subjects.

Embodiments of this application further provide a computer program product, including a computer program/instructions. The computer program/instructions, when executed by a processor, implement the descriptions of the data processing method in the foregoing corresponding embodiments. Therefore, details are not described herein again. In addition, beneficial effects of using the same method are described. Details are not described again. For technical details not disclosed in the embodiment of the computer program product involved in this application, refer to the descriptions of the method embodiments of this application.

A person of ordinary skill in the art may notice that the exemplary units and algorithm steps described with reference to the embodiments disclosed in this specification can be implemented in electronic hardware, or a combination of computer software and electronic hardware. To clearly describe the interchangeability of hardware and software, the foregoing descriptions have generally described compositions and operations of the examples according to functions. Whether the functions are performed by hardware or software depends on particular applications and design constraint conditions of the technical solutions. A person skilled in the art may use different methods to implement the described functions for each particular application, but such implementation is not to be considered outside of the scope of this application.

The method and the related apparatus provided in the embodiments of this application are described with reference to the method flowcharts and/or schematic structural diagrams provided in the embodiments of this application. Each process and/or block in the method flowcharts and/or schematic structural diagrams and a combination of processes and/or blocks in the flowcharts and/or block diagrams may be specifically implemented by the computer program instructions. These computer program instructions may be provided to a general-purpose computer, a dedicated computer, an embedded processing machine, or a processor of another programmable network connection device to generate a machine, so that the instructions executed by the computer or the processor of the another programmable network connection device generate an apparatus for implementing the functions specified in one or more processes of the flowcharts and/or one or more blocks of the schematic diagrams of structures. These computer program instructions may also be stored in a computer-readable memory that can instruct a computer or any other programmable network connection device to work in a specific manner, so that the instructions stored in the computer-readable memory generate an artifact that includes an instruction apparatus. The instruction apparatus implements a specific function in one or more processes in the flowcharts and/or in one or more blocks in the schematic diagrams of structures. These computer program instructions may also be loaded onto a computer or another programmable network connection device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the schematic diagrams of structures.

What is disclosed above is merely exemplary embodiments of this application, and certainly is not intended to limit the scope of the claims of this application. Therefore, equivalent variations made in accordance with the claims of this application still fall within the scope of this application.

**Claims**

1. A data processing method, comprising:

   obtaining a service image and N candidate service labels that are associated with a pre-defined service, N being a positive integer greater than 1;
   for each of K time steps of the service image, adding a corresponding piece of random noise data to the service image, to obtain K noise-added images of the service image, K being a positive integer greater than 1;
   inputting the N candidate service labels and the K noise-added images to a service diffusion model, and for an i-th candidate service label of the N candidate service labels, denoising each of the K noise-added images of the service image based on the i-th candidate service label through the service diffusion model, to obtain K denoised images respectively corresponding to the K time steps for the i-th candidate service label, i being a positive integer less than or equal to N;
   for the i-th candidate service label, fusing the K denoised images respectively corresponding to the K time steps, to obtain a fused denoised image corresponding to the i-th candidate service label; and
   determining a target service label of the service image from the N candidate service labels based on fused denoised images respectively corresponding to the N candidate service labels.

2. The method according to claim 1, wherein for the i-th candidate service label, fusing the K denoised images respectively corresponding to the K time steps, to obtain a fused denoised image corresponding to the i-th candidate service label comprises:

   for the i-th candidate service label, performing averaging processing on the K denoised images respectively corresponding to the K time steps, to obtain an average denoised image corresponding to the i-th candidate service label; and
   determining the average denoised image corresponding to the i-th candidate service label as the fused denoised image corresponding to the i-th candidate service label.

3. The method according to claim 1 or 2, wherein the determining a target service label of the service image from the N candidate service labels based on fused denoised images respectively corresponding to the N candidate service labels comprises:

   determining, based on the fused denoised images respectively corresponding to the N candidate service labels, initial service feature values respectively corresponding to the N candidate service labels, wherein, for each candidate service label of the N candidate service labels, an initial service feature value corresponding to the candidate service label is configured for representing quality of a fused denoised image corresponding to the candidate service label;
   performing averaging processing on the initial service feature values respectively corresponding to the N candidate service labels, to obtain an average service feature value; and
   determining a candidate service label, whose initial service feature value is greater than the average service feature value, of the N candidate service labels as the target service label of the target service image.

4. The method according to claim 3, wherein the determining, based on the fused denoised images respectively corresponding to the N candidate service labels, initial service feature values respectively corresponding to the N candidate service labels comprises:

   accumulating pixel values in the fused denoised image corresponding to the i-th candidate service label, to obtain a total pixel value corresponding to the i-th candidate service label; and
   determining the total pixel value corresponding to the i-th candidate service label as an initial service feature value corresponding to the i-th candidate service label.

5. The method according to claim 1 or 2, further comprising:

adding random noise data corresponding to a random step t to a sample service image associated with the pre-defined service, to obtain a noise-added sample image of the sample service image; and adding the random noise data corresponding to the random step t to a reference image, to obtain a noise-added reference image of the reference image, t being a positive integer;

recognizing a first-type correlation feature between the reference image and a reference image label of the reference image through a reference diffusion model based on the noise-added reference image of the reference image;

recognizing prediction noise data in the noise-added sample image of the sample service image through an initial diffusion model based on the first-type correlation feature and an annotated service label of the sample service image, a structure of the initial diffusion model being the same as a structure of the reference diffusion model; and training the initial diffusion model based on the prediction noise data and the random noise data corresponding to the random step t, to obtain the service diffusion model.

6. The method according to claim 5, wherein the reference diffusion model comprises an up-sampling network comprising L up-sampling blocks and a down-sampling network comprising L down-sampling blocks, L being a positive integer greater than 1; and

the recognizing a first-type correlation feature between the reference image and a reference image label of the reference image through a reference diffusion model based on the noise-added reference image of the reference image comprises:

in a (j+1)-th up-sampling,

obtaining an up-sampling image $X_j$ of the reference image that is outputted by an j-th up-sampling block of the reference diffusion model, the up-sampling image $X_j$ of the reference image being obtained based on the noise-added reference image of the reference image, and j being a positive integer less than L;

obtaining a (L-j)-th down-sampling image of the reference image that is outputted by a (L-j)-th down-sampling block of the reference diffusion model in an (L-j)-th down-sampling; and

recognizing, through a (j+1)-th up-sampling block of the reference diffusion model based on the reference image label, the up-sampling image $X_j$, and the (L-j)-th down-sampling image of the reference image in the (L-j)-th down-sampling, a (j+1)-th correlation feature between the reference image and the reference image label in the (j+1)-th up-sampling; and

determining a correlation feature between the reference image and the reference image label obtained in each up-sampling as a first-type correlation feature between the reference image and the reference image label.

7. The method according to claim 6, wherein the recognizing, through a (j+1)-th up-sampling block of the reference diffusion model based on the reference image label, the up-sampling image $X_j$, and the (L-j)-th down-sampling image of the reference image in the (L-j)-th down-sampling, a (j+1)-th correlation feature between the reference image and the reference image label in the (j+1)-th up-sampling comprises:

fusing, through the (j+1)-th up-sampling block of the reference diffusion model, the up-sampling image $X_j$, and the (L-j)-th down-sampling image of the reference image, to obtain a (j+1)-th reference fused image;

obtaining a (j+1)-th text weight and a (j+1)-th image weight that are corresponding to the (j+1)-th up-sampling block of the reference diffusion model;

performing weighting processing on a text feature corresponding to the reference image label by using the (j+1)-th text weight, to obtain a weighted (j+1)-th text vector;

performing weighting processing on an image feature of the (j+1)-th reference fused image by using the (j+1)-th image weight, to obtain a weighted (j+1)-th image vector; and

determining the (j+1)-th correlation feature between the reference image and the reference image label in the (j+1)-th up-sampling based on the weighted (j+1)-th text vector and the weighted (j+1)-th image vector.

8. The method according to claim 7, wherein the determining the (j+1)-th correlation feature between the reference image and the reference image label in the (j+1)-th up-sampling based on the (j+1)-th weighted text vector and the (j+1)-th weighted image vector comprises:

multiplying the weighted (j+1)-th text vector by the weighted (j+1)-th image vector, to obtain an initial (j+1)-th correlation feature between the reference image and the reference image label in the (j+1)-th up-sampling;

normalizing the initial (j+1)-th correlation feature between the reference image and the reference image label, to obtain a normalized (j+1)-th correlation feature; and

determining the (j+1)-th correlation feature between the reference image and the reference image label in the (j+1)-th up-sampling based on the normalized (j+1)-th correlation feature and a serial number of the (j+1)-th up-sampling block in the reference diffusion model.

9. The method according to claim 5, wherein the first-type correlation feature comprises a (j+1)-th correlation feature between the reference image and the reference image label in a (j+1)-th up-sampling, an up-sampling network of the initial diffusion model comprises L up-sampling blocks, and a down-sampling network of the initial diffusion model comprises L down-sampling blocks, L being a positive integer greater than 1, and j being a positive integer less than L; and

the recognizing prediction noise data in the noise-added sample image of the sample service image through an initial diffusion model based on the first-type correlation feature and an annotated service label of the sample service image, a structure of the initial diffusion model being the same as a structure of the reference diffusion model comprises:

in a (j+1)-th up-sampling,

obtaining an up-sampling image $Y_j$ of the sample service image that is outputted by a j-th up-sampling block of the initial diffusion model, the up-sampling image $Y_j$ of the sample service image being obtained based on the noise-added sample image of the sample service image;

obtaining a (L-j)-th down-sampling image of the sample service image that is outputted by a down-sampling block of the initial diffusion model in an (L-j)-th down-sampling; and

recognizing a second-type correlation feature through a (j+1)-th up-sampling block of the initial diffusion model based on the annotated service label, the up-sampling image $Y_j$, a (j+1)-th correlation feature, and the (L-j)-th down-sampling image of the sample service image, the (j+1)-th correlation feature being a correlation feature between the reference image and the reference image label in the (j+1)-th up-sampling, and the second-type correlation feature being a correlation feature between the sample service image and the annotated service label in the (j+1)-th up-sampling; and

determining the prediction noise data in the noise-added sample image of the sample service image based on a second-type correlation feature obtained in an L-th up-sampling.

10. The method according to claim 9, wherein the recognizing a second-type correlation feature through a (j+1)-th up-sampling block of the initial diffusion model based on the annotated service label, the up-sampling image $Y_j$, a (j+1)-th correlation feature, and the (L-j)-th down-sampling image of the sample service image comprises:

fusing, through the (j+1)-th up-sampling block of the initial diffusion model, the up-sampling image $Y_j$ and the down-sampling image of the sample service image in the (L-j)-th down-sampling, to obtain a (j+1)-th service fused image;

fusing the (j+1)-th correlation feature and an image feature of the (j+1)-th service fused image, to obtain a (j+1)-th image fused feature; and

recognizing the annotated service label and the (j+1)-th image fused feature through the (j+1)-th up-sampling block of the initial diffusion model, to obtain the (j+1)-th second-type correlation feature.

11. The method according to claim 5, wherein the initial diffusion model comprises an up-sampling network, and the training the initial diffusion model based on the prediction noise data and the random noise data corresponding to the random step t, to obtain the service diffusion model comprises:

calculating a noise prediction error of the initial diffusion model based on the prediction noise data and the random noise data corresponding to the random step t;

determining a convergence state of the initial diffusion model based on the noise prediction error; and

training the up-sampling network of the initial diffusion model based on the noise prediction error if the initial diffusion model is in a non-convergent state, to obtain the service diffusion model.

12. The method according to claim 11, wherein the training the up-sampling network of the initial diffusion model based on the noise prediction error if the initial diffusion model is in a non-convergent state, to obtain the service diffusion model comprises:

adjusting a weight of the up-sampling network of the initial diffusion model based on the noise prediction error if the initial diffusion model is in the non-convergent state, to obtain an adjusted initial diffusion model;

recognizing updated noise data in a noise-added sample image feature of the sample service image through the adjusted initial diffusion model based on the first-type correlation feature and the annotated service label of the sample service image;

training an up-sampling network of the adjusted initial diffusion model based on the updated noise data and the random noise data corresponding to the random step t; and

determining, until the adjusted initial diffusion model is in a convergent state, the adjusted initial diffusion model in the convergent state as the service diffusion model.

13. A data processing apparatus, comprising:

an obtaining module, configured to obtain a service image and N candidate service labels that are associated with a pre-defined service, N being a positive integer greater than 1;

an addition module, configured to, for each of K time steps of the service image, add a corresponding piece of random noise data to the service image, to obtain K noise-added images of the service image, K being a positive integer greater than 1;

a processing module, configured to: input the N candidate service labels and the K noise-added images to a service diffusion model, and for an i-th candidate service label of the N candidate service labels, denoise each of the K noise-added images of the service image based on the i-th candidate service label through the service diffusion model, to obtain K denoised images respectively corresponding to the K time steps for the i-th candidate service label, i being a positive integer less than or equal to N;

a fusion module, configured to, for the i-th candidate service label, fuse the K denoised images respectively corresponding to the K time steps, to obtain a fused denoised image corresponding to the i-th candidate service label; and

a determining module, configured to determine a target service label of the service image from the N candidate service labels based on fused denoised images respectively corresponding to the N candidate service labels.

14. A computer device, comprising a memory and a processor, the memory having a computer program stored therein, and the processor, when executing the computer program, implementing the operations of the method according to any one of claims 1 to 12.

15. A computer-readable storage medium, having a computer program stored therein, the computer program, when executed by a processor, implementing the operations of the method according to any one of claims 1 to 12.

FIG. 1

FIG. 2

20a

General
diffusion
model

| Noise-adding network | → | Down-sampling network | → | Up-sampling network |

Initialize          Initialize          Initialize

Initial
diffusion
model

| Noise-adding network | → | Down-sampling network | → | Up-sampling network |

21a

General image
label

General
diffusion
model

| Noise-adding network | → | Down-sampling network | → | Up-sampling network |

First-type
correlation feature

FIG. 3

FIG. 4

Obtain a target service image and N candidate service labels that are associated with a target service ⟋ S101

Add random noise data corresponding to K time steps to the target service image, to obtain K noise-added images of the target service image ⟋ S102

Output the N candidate service labels and the K noise-added images of the target service image to a service diffusion model, and denoise the K noise-added images of the target service image based on a candidate service label i through the service diffusion model, to obtain denoised images respectively corresponding to the candidate service label i in the K time steps ⟋ S103

Fuse the denoised images respectively corresponding to the candidate service label i in the K time steps, to obtain a fused denoised image corresponding to the candidate service label i ⟋ S104

Determine a target service label of the target service image from the N candidate service labels based on fused denoised images respectively corresponding to the N candidate service labels ⟋ S105

FIG. 5

Target service image

Denoised image

Service diffusion model

Dinosaur

Target image region

FIG. 6

Add random noise data corresponding to a random step t to a sample service image associated with a target service, to obtain a noise-added image of the sample service image; and add the random noise data corresponding to the random step t to a general image, to obtain a noise-added image of the general image ⎯ S201

Recognize a first-type correlation feature between the general image and a general image label through a general diffusion model based on the noise-added image of the general image ⎯ S202

Recognize prediction noise data in the noise-added image of the sample service image through an initial diffusion model based on the first-type correlation feature and a marking service label of the sample service image ⎯ S203

Train the initial diffusion model based on the prediction noise data and the random noise data corresponding to the random step t, to obtain a service diffusion model ⎯ S204

Obtain a target service image and N candidate service labels that are associated with the target service ⎯ S205

Add random noise data corresponding to K time steps to the target service image, to obtain K noise-added images of the target service image ⎯ S206

Output the N candidate service labels and the K noise-added images of the target service image to the service diffusion model, and denoise the K noise-added images of the target service image based on a candidate service label i through the service diffusion model, to obtain denoised images respectively corresponding to the candidate service label i in the K time steps ⎯ S207

Fuse the denoised images respectively corresponding to the candidate service label i in the K time steps, to obtain a fused denoised image corresponding to the candidate service label i ⎯ S208

Determine a target service label of the target service image from the N candidate service labels based on fused denoised images respectively corresponding to the N candidate service labels ⎯ S209

FIG. 7

FIG. 8

General diffusion model

Up-sampling block j+1

| Residual network layer | Self-attention layer | Cross-attention layer |

Correlation feature j+1

Initial diffusion model

Up-sampling block j+1

| Residual network layer | Self-attention layer | Cross-attention layer |

FIG. 9

Data processing apparatus

Obtaining module 1011 — Addition module 1012 — Processing module 1013

Fusion module 1014

First averaging processing unit 101a — First determining unit 102a

Determining module 1015

Second determining unit 103a — Second averaging processing unit 104a — Third determining unit 105a

First recognition module 1016 — Second recognition module 1017 — Training module 1018

FIG. 10

1000

1001
Processor

1005

1002

1003
User interface

Display

Keyboard

1004
Network interface

Operating system

Network communication module

User interface module

Device control application

Memory

Computer device

FIG. 11

## INTERNATIONAL SEARCH REPORT

| | International application No. |
|---|---|
| | **PCT/CN2023/118621** |

### A. CLASSIFICATION OF SUBJECT MATTER

G06V10/764(2022.01)i

According to International Patent Classification (IPC) or to both national classification and IPC

### B. FIELDS SEARCHED

Minimum documentation searched (classification system followed by classification symbols)

IPC: G06V, G06T, G06N

Documentation searched other than minimum documentation to the extent that such documents are included in the fields searched

Electronic data base consulted during the international search (name of data base and, where practicable, search terms used)

CNTXT, ENTXTC, ENTXT, DWPI: 图像, 标签, 属性, 匹配, 对应, 确定, 准确, 扩散, 模型, 噪声, 加噪, 去噪, 融合, 步长, 上采样, 下采样, image, label, attribute, match, corresponding, determine, accurate, diffusion, model, noise, add, imnoise, denoise, step, fuse, up, down, sample

### C. DOCUMENTS CONSIDERED TO BE RELEVANT

| Category* | Citation of document, with indication, where appropriate, of the relevant passages | Relevant to claim No. |
|---|---|---|
| PX | CN 116704269 A (TENCENT TECHNOLOGY (SHENZHEN) CO., LTD.) 05 September 2023 (2023-09-05)<br>description, paragraphs [0036]-[0109] | 1-15 |
| A | CN 116152603 A (HUIKEYUN (SHANGHAI) DATA SERVICE CO., LTD.) 23 May 2023 (2023-05-23)<br>description, paragraphs [0056]-[0143] | 1-15 |
| A | CN 116363421 A (BEIJING UNIVERSITY OF POSTS AND TELECOMMUNICATIONS) 30 June 2023 (2023-06-30)<br>entire document | 1-15 |
| A | CN 116433501 A (ALIBABA (CHINA) CO., LTD.) 14 July 2023 (2023-07-14)<br>entire document | 1-15 |
| A | US 2023103638 A1 (GOOGLE LLC) 06 April 2023 (2023-04-06)<br>entire document | 1-15 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 April 2024** | **24 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/118621** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2019377979 A1 (TENCENT TECHNOLOGY (SHENZHEN) CO., LTD.) 12 December 2019 (2019-12-12) entire document | 1-15 |

**INTERNATIONAL SEARCH REPORT**
**Information on patent family members**

International application No.

**PCT/CN2023/118621**

| Patent document cited in search report | | | Publication date (day/month/year) | Patent family member(s) | | | Publication date (day/month/year) |
|---|---|---|---|---|---|---|---|
| CN | 116704269 | A | 05 September 2023 | None | | | |
| CN | 116152603 | A | 23 May 2023 | None | | | |
| CN | 116363421 | A | 30 June 2023 | None | | | |
| CN | 116433501 | A | 14 July 2023 | None | | | |
| US | 2023103638 | A1 | 06 April 2023 | None | | | |
| US | 2019377979 | A1 | 12 December 2019 | US | 2022156518 | A1 | 19 May 2022 |
| | | | | TW | 201843654 | A | 16 December 2018 |
| | | | | WO | 2019042244 | A1 | 07 March 2019 |
| | | | | CN | 108305296 | A | 20 July 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023109769761